# EUROPÄISCHE PATENTSCHRIFT

(11) **EP 3 158 639 B1**
(45) Veröffentlichungstag und Bekanntmachung des Hinweises auf die Patenterteilung: **28.04.2021**
(21) Anmeldenummer: 15749970.8
(22) Anmeldetag: 11.06.2015
(51) Int. Cl.: H02P 8/34, H02P 8/30, H02P 8/12, H02P 8/14, H02P 8/04, H02P 8/22

(54) **VERFAHREN UND SCHALTUNGSANORDNUNG ZUM ANSTEUERN EINES SCHRITTMOTORS**
METHOD AND CIRCUIT FOR DRIVING A STEPPING MOTOR
PROCÉDÉ ET CIRCUIT POUR COMMANDER UN MOTEUR PAS À PAS

(30) Priorität: 18.06.2014 DE 102014108637
(43) Veröffentlichungstag der Anmeldung: 26.04.2017
(73) Patentinhaber: Maxim Integrated Products, Inc., San Jose, CA 95134 (US)
(72) Erfinder: DWERSTEG, Bernhard, 25462 Rellingen (DE)
(74) Vertreter: Canzler & Bergmeier Patentanwälte Partnerschaft mbB
(86) Internationale Anmeldenummer: PCT/DE2015/100236
(87) Internationale Veröffentlichungsnummer: WO 2015/192831

(56) Entgegenhaltungen:
- EP-A1- 2 375 558
- EP-A2- 2 428 480
- DE-A1-102011 000 569
- US-A- 4 926 104
- US-A1- 2008 309 274

## Beschreibung

Die Erfindung betrifft ein Verfahren und eine Schaltungsanordnung, mit dem/der ein Schrittmotor durch eine adaptive Ansteuerung über einen großen Drehzahlbereich einschließlich eines Stillstandes, in dem der Motor in einer bestimmten Drehstellung elektrisch fixiert wird, sowie entsprechend einem vorgegebenen Motorstromverlauf mit hoher Präzision betrieben werden kann.

Bei Schrittmotoren wird ein magnetischer Rotor bekanntlich durch ein gesteuertes, mit statischen Motorspulen erzeugtes und schrittweise rotierendes elektromagnetisches Feld schrittweise um jeweils einen kleinen Winkel gedreht.

Dabei besteht häufig der Wunsch, den Motor mit möglichst kleinen Schrittwinkeln drehen zu können, um eine möglichst hohe Auflösung bzw. Genauigkeit der Positionierung und einen gleichmäßigeren Drehmomentverlauf zu erzielen. Aus diesem Grunde wird anstelle des bekannten Vollschritt- und Halbschritt-Betriebes der so genannte Mikroschrittbetrieb bevorzugt, bei dem die durch die Motorspulen fließenden Ströme nicht nur ein- und ausgeschaltet werden, sondern in bestimmter Weise ansteigen und abfallen. Die Auflösung und die Gleichmäßigkeit, mit der der Schrittmotor die Mikroschritte ausführt, hängt dabei im Wesentlichen davon ab, mit wie viel verschiedenen Stromamplituden die Motorspulen angesteuert werden und wie genau diese eingehalten werden können. Dabei ist eine sinusförmige bzw. cosinusförmige Erregung der Motorspulen im Allgemeinen am zweckmäßigsten, da damit bei mikroschrittoptimierten Motoren auch ein sehr kontinuierliches, d.h. ruckfreies Drehen und somit ein ruhiger Motorlauf erzielt werden kann.

Zum elektrischen Ansteuern von Schrittmotoren insbesondere im Mikroschrittbetrieb dienen zum Beispiel bekannte Chopper-Verfahren, mit denen mit Hilfe einer Motor-Versorgungsspannung (Gleichspannung) in jede der Motorspulen die für jeden Zeitpunkt durch eine Stromvorgabe (Soll-Spulenstrom) gegebene Stromrichtung, Stromhöhe und Stromform mittels Strompulsen eingeprägt wird, um mit dem dadurch induzierten, rotierenden Magnetfeld den Rotor des Motors anzutreiben.

Dabei ist es üblich, den tatsächlich durch die Motorspulen fließenden Strom zu messen und diesen in Abhängigkeit davon in positiver und negativer Richtung bzw. Polarität mittels geeignet aktivierter und zeitlich bemessener Chopper-Phasen (ON, SD, FD) eines Chopper-Verfahrens so zu regeln, dass er in jeder Chopper-Phase und damit über den gesamten Verlauf zumindest weitgehend mit dem Verlauf und der Polarität des betreffenden Soll-Spulenstroms übereinstimmt. Diese Betriebsart soll nachfolgend als Stromgeregelte Betriebsart bezeichnet werden.

Bei einem solchen Chopper-Verfahren werden üblicherweise drei verschiedene Chopper-Phasen (Spulenstromphasen) unterschieden, nämlich ON-, FD- und SD-Phasen.

Während der ON-Phase (auch positive Einschaltphase genannt) wird der Spulenstrom in eine Spule jeweils in Richtung der momentan vorgegebenen Polarität bzw. Richtung des Spulenstroms aktiv durch die Spule getrieben, so dass der Spulenstrombetrag relativ schnell und kontinuierlich ansteigt (Einschaltperiode), bis er seinen momentanen Sollwert erreicht hat und die ON-Phase dann beendet wird. Die durch eine ON-Phase eingeprägte Spulenstromrichtung ist also gleich der momentanen Polarität bzw. Richtung des Spulenstroms.

Die Polarität des Spulenstromes ist dabei im Falle eines sinusförmigen Spulenstroms z.B. positiv im ersten und zweiten Quadranten und negativ im dritten und vierten Quadranten.

Während der FD-Phase (negative Einschaltphase) wird der Spulenstrom entgegen der gerade vorgegebenen Polarität des Spulenstroms durch Umpolen der Spule und Rückspeisung des Spulenstroms in die Stromversorgung aktiv wieder abgebaut, bis er seinen momentanen Sollwert erreicht hat und die FD-Phase dann beendet wird. Alternativ dazu kann allerdings eine FD-Phase auch ungeregelt nach Ablauf einer vorbestimmten Zeitdauer mit dem Ziel beendet werden, in der jeweiligen FD-Phase den in der Applikation aufgrund von Erfahrungswerten maximal notwendigen Abbau des Spulenstroms zu gewährleisten, ohne diesen tatsächlich zu messen. Die FD-Phase dient in jedem Fall dazu, den Spulenstrom insbesondere in den Phasen fallenden Spulenstrombetrages (d.h. während des zweiten und vierten Quadranten eines sinusförmigen Spulenstroms) relativ schnell abzubauen.

Als dritte Chopper-Phase ist die Rezirkulationsphase oder SD-Phase zu nennen, in der die betreffende Spule nicht aktiv angesteuert wird, sondern kurzgeschlossen bzw. gebrückt ist, so dass der Spulenstrom aufgrund des Innenwiderstandes der Spule und der Gegen-EMK nur allmählich (d.h. langsamer als während der FD-Phase) abfällt. In dieser Phase kann der Spulenstrom üblicherweise nicht gemessen werden, so dass die SD-Phase nach Ablauf einer vorbestimmten Zeitdauer beendet werden muss, wobei üblicherweise für alle SD-Phasen die gleiche konstante Zeitdauer festgelegt wird.

Diese drei Chopper-Phasen werden also durch von dem Chopper erzeugte und einer Treiberschaltung für die Motorspulen zugeführte Chopper-Schaltsignale zeitlich so aktiviert, kombiniert und bemessen, dass der tatsächliche Spulenstrom über seinen gesamten (z.B. sinusförmigen) Verlauf, also während der steigenden und der fallenden Spulenstromphasen, möglichst zeitnah und genau der entsprechenden Stromvorgabe (Soll-Spulenstrom) für die betreffende Motorspule folgt und insbesondere durch die durch den Rotor in den Motorspulen gegeninduzierte Spannung (Gegen-EMK) oder andere Einflüsse und Effekte nicht (wesentlich) verändert wird. Mit anderen Worten setzt sich also jede Periode des tatsächlichen Spulenstroms aus einer Vielzahl von Chopper-Phasen zusammen, mit denen jeweils der zu dem jeweiligen Zeitpunkt der Aktivierung der betreffenden Chopper-Phase vorgegebene Soll-Spulenstromwert der Stromperiode in die Spule eingeprägt wird.

Es hat sich jedoch gezeigt, dass bei dieser Stromgeregelten Betriebsart insbesondere bei niedriger Motor-Drehzahl und bei Stillstand des Motors an einer elektrisch festgelegten Position (d.h. in einer bestimmten Drehstellung) kurzzeitige Stromänderungen aufgrund von Regelschwankungen auftreten können, die im hörbaren Frequenzbereich liegen und damit als störend empfunden werden. Solche Regelschwankungen entstehen durch Mess- und Abtastrauschen, Kopplungen innerhalb des Motors und durch Störungen aus anderen Schaltungsteilen oder aus der Versorgungsspannung.

Außerdem kann es bei niedrigen Motorströmen in Verbindung mit einer daraus resultierenden, nur sehr kurzen Dauer der ON- und ggf. der FD-Phasen aufgrund von Einschwingvorgängen und Blankzeiten schwierig sein, den tatsächlich während dieser kurzen Phasen fließenden Spulenstrom zuverlässig zu messen und mit einem momentanen Soll-Spulenstromwert zu vergleichen. Diese Phasen werden daher oft auf einen gewissen Minimalwert verlängert.

Das Dokument EP 2 428 480 A2 offenbart eine Schrittmotorensteuerung. Im Stillstand werden die Phasen mit einem geringen Standstrom bestromt. Beim Beschleunigen des Schrittmotors wird ein Strom mit einer sehr großen Stromamplitude eingesetzt. Hat der Schrittmotor seine Betriebsdrehzahl erreicht, so kann in einen Laufbetriebszustand umgeschaltet werden, in dem die Stromamplitude der Ströme zwischen der im Stillstand und in der Beschleunigungsphase liegt.

Das Dokument US 2008/0309274 A1 offenbart einen Schrittmotor in einer H-Brückenschaltung und einer Regelungm welche PWM Steuersignale an die H-Brückenschaltung in Abhängigkeit des Stromes ausgibt.

Das Dokument US 4,926,104 offenbart einen Motor welcher in Abhängigkeit von der Anzahl der eingetreten Überschreitungen eines Stromsollwertes von einem Betriebsmodus in einen zweiten Betriebsmodus schaltet.

Der Erfindung liegt deshalb die Aufgabe zugrunde, ein Verfahren und eine Schaltungsanordnung zum Ansteuern eines Schrittmotors zu schaffen, mit dem/der mit relativ geringem schaltungstechnischen Aufwand ein insbesondere im Hinblick auf einen gewünschten Soll-Spulenstromverlauf optimierter (und damit insbesondere laufruhiger) Betrieb eines Schrittmotors über einen weiten Drehzahlbereich, d.h. zwischen einem Stillstand des Motors, in dem dieser in einer bestimmten Drehstellung elektrisch fixiert ist, und einer Motor-bedingten höchsten Drehzahl, ermöglicht wird.

Gelöst wird diese Aufgabe mit einem Verfahren gemäß Anspruch 1 und 2 sowie einer Schaltungsanordnung gemäß Anspruch 15 und 16.

Die erfindungsgemäße Lösung wird bevorzugt für den Mikroschrittbetrieb angewandt, kann aber auch für den Voll- oder Halbschrittbetrieb realisiert werden. Die Unteransprüche haben vorteilhafte Weiterbildungen der Erfindung zum Inhalt.

Weitere Vorteile der Erfindung ergeben sich aus der folgenden Beschreibung von bevorzugten Ausführungsformen anhand der Zeichnung. Es zeigt:
- Fig. 1: Schaltbilder der drei Chopper-Phasen einer Motorspule während eines Chopperbetriebes;
- Fig. 2: Zeitdiagramme von an eine Motorspule angelegten PWM-Spannungen bzw. dadurch erzeugten Strömen;
- Fig. 3: Zeitdiagramme des Verlaufes von an eine Motorspule angelegten (Effektiv-) Spannungen sowie der resultierenden Ströme;
- Fig. 4: Zeitdiagramme des Verlaufes von an eine Motorspule angelegten Spannungen sowie der resultierenden Ströme und deren Erfassung;
- Fig. 5: ein Zeitdiagramm der Spannungen und Ströme im Bereich des Übergangs zwischen einer Spannungsgeregelten und einer Stromgeregelten Betriebsart;
- Fig. 6: ein Prinzipschaltbild einer beispielhaften Schaltungsanordnung zur Durchführung der erfindungsgemäßen Verfahren; und
- Fig. 7: ein Prinzipschaltbild einer Schaltungskomponente aus Figur 6.

Zunächst soll die Realisierung der drei eingangs genannten Chopper-Phasen in der Stromgeregelten Betriebsart beschrieben werden.

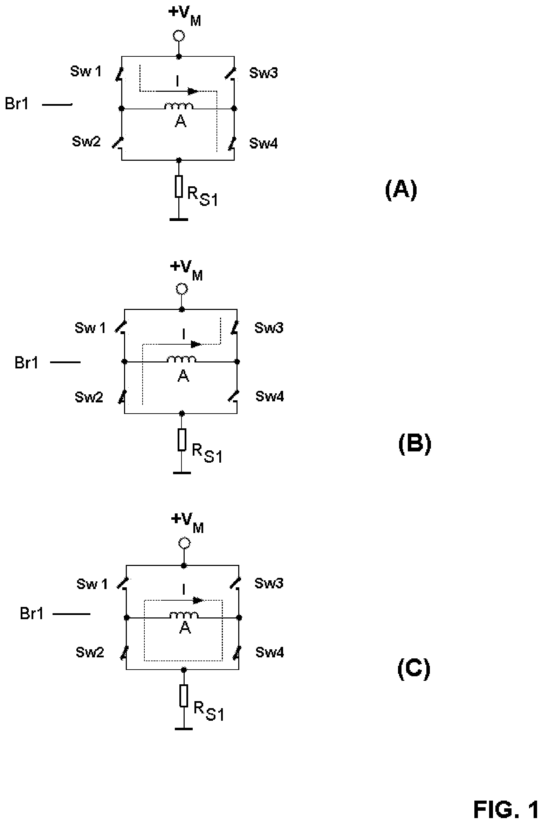

Die drei Chopper-Phasen sind schematisch in Figur 1(A), Figur 1(B) bzw. Figur 1(C) angedeutet. Diese drei Figuren zeigen jeweils eine Brückenschaltung Br1 aus einem ersten bis vierten Schalter Sw1, Sw2, Sw3, Sw4, wobei ein erster und ein zweiter Schalter Sw1, Sw2 sowie ein dritter und ein vierter Schalter Sw3, Sw4 jeweils in Reihe geschaltet und die beiden Reihenschaltungen parallel miteinander verbunden sind. Die betreffende Motorspule A ist mit den Mittelpunkten der Brückenzweige verbunden. Der Fußpunkt der Brückenschaltung ist über einen Messwiderstand R_{S1} zur Erfassung des tatsächlichen, in der Motorspule fließenden Motorstroms mit Masse verbunden, während der Kopf der Brückenschaltung an die Motor-Versorgungsspannung V_{M} angeschlossen ist. Die Schalter Sw1, Sw2, Sw3, Sw4 werden mittels einer Treiberschaltung geschaltet, der wiederum die Chopper-Schaltsignale zur Aktivierung der Chopper-Phasen zugeführt werden.

Figur 1(A) zeigt die Schalterstellungen und die daraus resultierende Richtung des Stromflusses I von der Versorgungsspannung V_{M} durch die Spule A nach Masse während der oben genannten ersten oder ON-Phase, in der diese Richtung jeweils die gleiche ist wie die momentan vorgegebene Richtung bzw. Polarität des Spulenstroms, wobei der erste und der vierte Schalter Sw1, Sw4 geschlossen und der zweite und der dritte Schalter Sw2, Sw3 geöffnet sind.

Figur 1(B) zeigt die Schalterstellungen und die daraus resultierende Umpolung der Spule A sowie die Rückspeisung des Spulenstroms I in die Versorgungsspannung V_{M} d.h. entgegen der momentan vorgegebenen Richtung bzw. Polarität des Spulenstroms (die hier die gleiche ist wie in Figur 1(A)) während der oben genannten zweiten oder FD-Phase, in der der erste und der vierte Schalter Sw1, Sw4 geöffnet und der zweite und der dritte Schalter Sw2, Sw3 geschlossen sind.

Schließlich zeigt Figur 1(C) die dritte oder SD-Phase, bei der die Spule A kurzgeschlossen oder gebrückt ist, d.h. der zweite und der vierte Schalter Sw2, Sw4 sind geschlossen, während der erste und der dritte Schalter Sw1, Sw3 geöffnet sind (oder entsprechend umgekehrt), so dass sich der in der Spule A fließende Strom I entsprechend dem Innenwiderstand der Spule A allmählich abbaut, d.h. rezirkuliert.

Der Einfachheit halber wird für die folgenden Betrachtungen ein Mikroschrittbetrieb mit einer im Wesentlichen sinus-förmigen Strom-Ansteuerung der Spulen angenommen, d.h. bei einem 2-Phasen-Schrittmotor wird eine der beiden Spulen mit einem sinusförmigen Stromverlauf und die andere Spule mit einem dagegen um 90° phasenverschobenen und somit cosinus-förmigen Stromverlauf beaufschlagt. Die folgenden Betrachtungen gelten jedoch bei nicht-sinusförmiger Ansteuerung und/oder Schrittmotoren mit einer anderen Anzahl von Phasen und der damit verbundenen anderen Phasenverschiebung der ansteuernden Spulenströme relativ zueinander sowie bei einem Voll- und Halbschrittbetrieb entsprechend.

Da bei dieser Stromgeregelten Betriebsart der tatsächliche Strom durch die Spulen in jeder ON- und ggf. FD-Phase aktiv nachgeregelt wird, kann mit dieser Betriebsart sehr schnell auf Änderungen bzw. Abweichungen des tatsächlichen Spulenstromes reagiert werden. Damit ist es z.B. auch möglich, Resonanzsituationen aktiv durch entsprechendes Herunterregeln des überschüssigen Spulenstromes zu dämpfen. Da diese Betriebsart jedoch bei niedrigen Drehzahlen und im Stillstand des Motors die oben beschriebenen Nachteile aufweisen kann, wird sie erfindungsgemäß erst ab einer vorbestimmten Mindest-Drehzahl des Motors aktiviert. Unterhalb dieser Drehzahl wird der Motor erfindungsgemäß mit einer Spannungsbasierten (d.h. Spannungsgesteuerten oder Spannungsgeregelten) Betriebsart angesteuert, bei der der erforderliche Spulenstrom nicht über die Aktivierung und Dauer der Chopper-Phasen (d.h. Stromflussphasen) eingeprägt, sondern mittels einer an die Motorspulen angelegten Spannung erzeugt und durch Veränderung deren Betrages (bzw. von deren Amplitude) und deren Richtung (bzw. Polarität) eingestellt wird.

Dabei muss der Betrag dieser Spannung unter Berücksichtigung insbesondere des Innenwiderstandes der Motorspulen sowie der mit steigender Drehzahl zunehmenden Gegen-EMK so gesteuert bzw. geregelt werden, dass sie den momentanen Soll-Spulenstrom durch die Motorspulen fließen lässt. Diese Spannung kann z.B. eine PWM-Spannung sein, die aus der Motor-Versorgungspannung erzeugt wird.

Insbesondere kann die Motor-Versorgungsspannung Pulsweiten-moduliert und mit entsprechender Polarität an die Motorspulen angelegt werden, wobei das Tastverhältnis dieser Modulation jeweils so gesteuert oder geregelt wird, dass die resultierende effektive Spannung an den Motorspulen jeweils einen Betrag aufweist, der den momentanen Soll-Spulenstromwert fließen lässt.

Die Steuerung der Pulsweiten-Modulation (PWM) kann z.B. auf der Grundlage von Vorgabewerten und einer Parametrierung oder einer gespeicherten Zuordnung zwischen einer Anzahl vorgegebener Motor-Drehzahlbereiche und dem dafür jeweils erforderlichen Tastverhältnis der PWM-Spannung erfolgen. Allerdings können dabei Einflüsse wie z.B. eine Erwärmung der Motorspulen und eine dadurch verursachte Erhöhung des Innenwiderstandes der Spulen, oder lastbedingte Lastwinkeländerungen, die wiederum die Phase der Gegen-EMK und damit den effektiven Spulenstrom beeinflussen, nicht berücksichtigt werden.

Deshalb wird es bevorzugt, den tatsächlichen Spulenstrom zu messen und das Tastverhältnis der an die Spule angelegten PWM-Spannung über eine Stromregelschleife entsprechend zu regeln.

Der tatsächliche Spulenstrom kann dabei z.B. mittels eines Analog-Digital-Wandlers erfasst werden, um die Amplitude bzw. den Betrag der an die Spule angelegten Spannung oder das Tastverhältnis der PWM-Spannung z.B. über einen Regler, vorzugsweise einen PI-Regler, nachzuführen. Dies hat eine im Vergleich zu der oben beschriebenen Strombasierten Betriebsart relativ langsame Nachführung der effektiven Spulenspannung und damit des Spulenstromes zur Folge, so dass also mit der Spannungsgeregelten Betriebsart nicht so schnell auf Stromabweichungen reagiert werden kann wie mit der Stromgeregelten Betriebsart (bei der der Spulenstrom in jeder ON- und ggf. FD-Chopper-Phase nachgeregelt wird). Damit werden in der Spannungsgeregelten Betriebsart zwar einerseits z.B. kurzzeitige Stromabweichungen nicht korrigiert, andererseits entsteht aber auch kein Stromripple im hohen Frequenzbereich aufgrund von Messungenauigkeiten bei niedrigen Spulenströmen. Ferner können auch keine kurzzeitigen Stromänderungen aufgrund von Regelschwankungen auftreten, die zu störenden Geräuschen im hörbaren Frequenzbereich führen können.

Weiterhin kann mit der Spannungsgeregelten Betriebsart der effektive Spulenstrom in beiden Spulen entweder aufgrund einer Messung des momentanen tatsächlichen Spulenstroms in jeweils nur einer Spule, oder aufgrund der Messung des momentanen tatsächlichen Spulenstromes in beiden Spulen parallel nachgeführt werden.

Eine Regelung des Tastverhältnisses der PWM-Spannung ist ferner auch im Hinblick auf die Kombination der Spannungsgeregelten Betriebsart mit der Stromgeregelten Betriebsart und eine einheitliche und einfache Nutzung der dafür jeweils erforderlichen Schaltungstechnischen Komponenten, sowie im Hinblick auf die Sicherstellung eines sprungfreien Überganges des Spulenstroms beim Wechsel zwischen beiden Betriebsarten vorteilhaft.

Im Folgenden soll deshalb eine Ausführungsform eines erfindungsgemäßen Verfahrens beschrieben werden, mit dem/der ein Schrittmotor im Stillstand und bei einer niedrigen Drehzahl, die unterhalb einer vorbestimmten Umschalt-Drehzahl liegt, mit einer Spannungsgeregelten Betriebsart und beim Überschreiten sowie einer oberhalb der Umschalt-Drehzahl liegenden höheren und hohen Drehzahl mit einer Stromgeregelten Betriebsart angesteuert wird.

Bei der Realisierung des erfindungsgemäßen Prinzips sowie zur Festlegung der Umschalt-Drehzahl sind folgende Gesichtspunkte zu berücksichtigen:
Wie oben bereits erwähnt wurde, können bei der Stromgeregelten Betriebsart bei niedriger Motor-Drehzahl und bei Stillstand des Motors Störgeräusche erzeugt werden, die im hörbaren Frequenzbereich liegen. Andererseits kann es bei relativ niedrigen Motorströmen (die insbesondere bei niedrigen Motor-Drehzahlen auftreten können) aufgrund der damit verbundenen nur sehr kurzen Dauer der ON-Phasen schwierig sein, den tatsächlich während dieser ON-Phasen durch die Spulen fließenden Strom zu messen und mit einem Soll-Spulenstromwert zu vergleichen.

Zu Beginn jeder (ON- und ggf. FD-) Chopper-Phase muss nämlich zunächst eine Einschwingzeit abgewartet werden, innerhalb der sich zum einen Störungen des tatsächlichen Spulenstroms aufgrund des Einschaltvorgangs abbauen und andererseits sich der Messspannungspegel an dem betreffenden Messwiderstand R_{S} im Fußpunkt der Brücke entsprechend dem tatsächlichen Spulenstrom einpegelt. Ferner benötigt auch der Komparator, der dazu dient, einen den momentanen tatsächlichen Spulenstromwert repräsentierenden Messspannungspegel mit einem Soll-Spannungspegel, der einen vorgegebenen Soll-Spulenstromwert repräsentiert, zu vergleichen, zur Erzeugung seines Ausgangssignals eine bestimmte Zeitdauer. Somit muss also jede ON- (und ggf. jede FD-) Chopper-Phase eine bestimmte Mindestdauer (Blankzeit) aufweisen, bevor der tatsächliche Spulenstrom erfasst und auf den Soll-Spulenstromwert geregelt werden kann. Diese Dauer liegt üblicherweise im Bereich von einer oder wenigen Mikrosekunden und beträgt damit einige Prozent der Wiederholfrequenz der Chopper-Phasen, wenn diese, wie allgemein üblich, in einem Frequenzbereich geringfügig oberhalb des hörbaren Frequenzbereiches liegt.

Hingegen ist bei der Spannungsgeregelten Betriebsart zu berücksichtigen, dass bei höheren Drehzahlen und/oder einem höheren Lastwinkel des Motors eine Phasenverschiebung zwischen der Spulenspannung und dem Spulenstrom entsteht, so dass sich eine Veränderung der Spulenspannung nur entsprechend zeitversetzt auf den Spulenstrom auswirkt und eine exakte Regelung des aktuell gemessenen Spulenstroms durch Veränderung der Spulenspannung nicht mehr ohne weiteres möglich ist.

Ein weiteres Problem bei der Spannungsgeregelten Betriebsart kann dadurch entstehen, dass Schrittmotoren üblicherweise einen nur sehr geringen Innenwiderstand aufweisen, so dass eine nur relativ niedrige Spulenspannung und damit ein geringes Tastverhältnis der angelegten PWM-Spannung an den Spulen ausreicht, um einen bestimmten Soll-Spulenstrom fließen zu lassen. Wenn jedoch das Tastverhältnis zu gering wird und damit die Einschaltdauern der Spannung (und damit auch die Dauer der Stromfluss- oder Chopper-Phasen) eine bestimmte Mindestdauer unterschreiten, kann, wie schon oben im Zusammenhang mit der Stromgeregelten Betriebsart beschrieben wurde, der Spulenstrom (d.h. die resultierende Messspannung) nicht mehr mittels des Komparators mit dem betreffenden Sollwert verglichen werden.

Liegt an einer Spule z.B. eine effektive Spannung an, die 10% der Versorgungsspannung beträgt, und ist die Blankzeit 1 µs bei einer Periode der PWM-Spannung von 50 µs, so ist bei Einschaltdauern von weniger als 1 µs, also weniger als 2% Tastverhältnis der PWM-Spannung, keine Strommessung mehr möglich. Somit können mit einem solchen Motor Spulenstromwerte von weniger als 20% des Maximalstroms nicht mehr gemessen werden. Dies hat eine erhebliche Einschränkung der Messwerterfassung zur Folge.

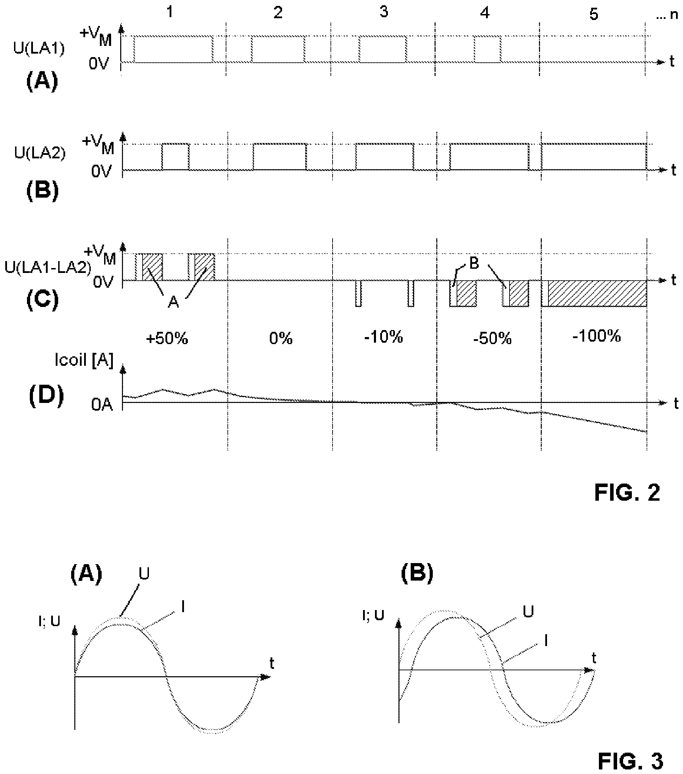

Zur Verdeutlichung sei auf Figur 2 Bezug genommen. In dieser Figur ist für fünf Chopperzyklen 1, 2, 3,...5 eine erste und eine zweite PWM-Spannung U(LA1), U(LA2) gezeigt, mit denen jeweils eine Versorgungsspannung +V_{M} an mindestens eine der Motorspulen angelegt wird, und zwar mit jeweils entgegengesetzten Polungen, so dass durch Veränderung der Pulsweiten dieser beiden Spannungen relativ zueinander eine effektive PWM-Spannung in Form einer Differenzspannung U(LA1-LA2) (Figur 2(C)) mit positiver oder negativer Polarität an die betreffende Motorspule angelegt werden kann, deren effektives Tastverhältnis zwischen -100% (negative Polarität) und +100% (positive Polarität) einstellbar ist. Der daraus resultierende, tatsächliche Spulenstromverlauf Icoil ist in Figur 2(D) beispielhaft angedeutet und wird somit durch einer Vielzahl n von solchen Chopperzyklen 1,2,...n erzeugt.

Dabei kann der tatsächliche, durch die effektive PWM-Spannung (d.h. die Differenzspannung U(LA1-LA2)) erzeugte Spulenstrom Icoil nur in den Zeitbereichen jeder Chopper-Phase gemessen werden, die in Figur 2(C) schraffiert und mit dem Buchstaben A bezeichnet sind, während die Blankzeiten, in denen aus den oben genannten Gründen nicht gemessen werden kann, mit dem Buchstaben B angedeutet sind.

Zur Lösung des sich daraus insbesondere bei geringem effektivem Tastverhältnis ergebenden Problems werden zwei Motorzustände unterschieden, nämlich Stillstand und Drehung des Motors.

Im Stillstand des Motors ist die Geschwindigkeit, mit der die Spulenströme geregelt werden müssen, gering bzw. unkritisch, da die den Strom beeinflussenden Größen, wie z.B. die Versorgungsspannung und die Motortemperatur oder auch Vorgabewerte des Soll-Spulenstroms, sich nicht oder nur langsam ändern. Da der Motor an einer festen elektrischen und damit mechanischen Position steht, ist der Strom in beiden Motorspulen konstant. Befindet sich der Motor im Mikroschrittbetrieb, so dass die beiden Motorspulen also mit sinus- bzw. cosinus-förmigen Stromverläufen angesteuert werden, und liegt der Stromwert in einer ersten Spule an oder nahe dem Spitzenwert der Sinuswelle, so ist der Stromwert in der anderen zweiten Spule bei oder nahe null. Damit ist auch das effektive Tastverhältnis an dieser zweiten Spule bei oder nahe null, so dass aufgrund der oben beschriebenen Blankzeit nur der Strom in der ersten Spule (in der der höhere Strom fließt) gemessen werden kann. Somit wird also vorzugsweise stets der Strom in der betragsmäßig stärker bestromten Spule gemessen und das effektive Tastverhältnis der Differenzspannung U(LA1-LA2) an dieser Spule entsprechend geregelt, und zwar in jedem Chopperzyklus 1, 2,...n durch Einstellung des Tastverhältnisses der ersten und der zweiten PWM-Spannung U(LA1), U(LA2) gemäß Figur 2(A) bzw. Figur 2(B).

Die Chopperzyklen haben dabei vorzugsweise alle die gleiche Zeitdauer, wobei jeder Chopperzyklus wie in Figur 2(A) und 2(B) gezeigt jeweils einen Impuls der ersten und der zweiten PWM-Spannung U(LA1), U(LA2) beinhaltet, die dann die Differenzspannung U(LA1-LA2) an der betreffenden Spule bilden.

Somit wird also in der Spannungsgeregelten Betriebsart zunächst abgefragt, in welcher Motorspule der betragsmäßig höhere Strom fließt.

Das oben genannte effektive Tastverhältnis der Differenzspannung U(LA1-LA2) an dieser Spule wird dann vorzugsweise wie folgt geregelt:
In einem ersten Schritt wird während einer ersten Chopper-Phase der tatsächliche momentane Spulenstromwert (z.B. mittels eines Messwiderstandes) gemessen und mit dem momentanen Soll-Spulenstromwert verglichen.

Wenn der gemessene Spulenstromwert betragsmäßig kleiner ist als der momentane Soll-Spulenstromwert, so wird in einen zweiten Schritt das Tastverhältnisses einer der beiden PWM-Spannungen U(LA1); U(LA2) erhöht und/oder das Tastverhältnis der anderen PWM-Spannung U(LA2); U(LA1) vermindert, wobei die Auswahl derjenigen ersten bzw. zweiten PWM-Spannung (die in entgegengesetzter Richtung an die Spule angelegt werden), deren Tastverhältnis erhöht bzw. vermindert wird, so gewählt wird, dass sich entsprechend der vorgegebenen momentanen Polarität des Soll-Spulenstromwertes der Betrag des tatsächlichen Spulenstromwertes erhöht.

Wenn jedoch der gemessene Spulenstromwert betragsmäßig größer ist als der momentane Soll-Spulenstromwert, so wird stattdessen in einem dritten Schritt das Tastverhältnis mindestens einer der beiden PWM-Spannungen in umgekehrter Richtung verändert, so dass sich entsprechend der vorgegebenen momentanen Polarität des Soll-Spulenstromwertes der Betrag des tatsächlichen Spulenstromwertes vermindert.

Gleichzeitig wird in der nächsten Chopper-Phase der tatsächliche momentane Spulenstromwert aufgrund des ggf. veränderten Tastverhältnisses wiederum wie in dem oben genannten ersten Schritt gemessen und der Ablauf wiederholt. Auf diese Weise pendelt also das effektive Tastverhältnis der Differenzspannung (Figur 2(C)) und damit auch der tatsächliche Spulenstromwert um den jeweiligen momentanen Soll-Spulenstromwert.

Der Vergleich des tatsächlichen momentanen Spulenstromwertes mit dem momentanen Soll-Spulenstromwert erfolgt vorzugsweise mittels eines Komparators, wobei der Zeitpunkt des Vergleiches vorzugsweise möglichst in die zeitliche Mitte jeder Chopper-Phase gelegt wird. Damit wird dem Umstand Rechnung getragen, dass der Strom in einer Spule nach jedem Einschalten aufgrund der Spuleninduktivität von einem Startwert auf einen Endwert ansteigt und in der Pause zwischen zwei Chopper-Phasen am Innenwiderstand der Spule und der betreffenden Treiberschaltung wieder im Wesentlichen von dem Endwert auf den Startwert absinkt.

Der Betrag der jeweiligen Veränderung des Tastverhältnisses mindestens einer der beiden PWM-Spannungen gemäß Figur 2(A) und 2(B) ist dabei vorzugsweise konstant und gleich und wird in der Weise vorbestimmt, dass die Amplitude, mit der der tatsächliche Spulenstromwert um den Soll-Spulenstromwert pendelt, einerseits nicht zu groß wird, andererseits der tatsächliche Spulenstromwert aber dem Soll-Spulenstromwert schnell genug folgen kann. Die Festlegung dieses Betrages kann entsprechend der Art des Motors und den Einsatzbedingungen durch Versuche festgelegt werden.

Bei einer bevorzugten verfeinerten Regelung wird von der Tatsache Gebrauch gemacht, dass der Spulenstrom Icoil, wie er beispielhaft in Figur 2(D) als Folge der effektive PWM-Spannung U(LA1-LA2) gemäß Figur 2C angedeutet ist, in jeder Chopper-Phase von einem Startwert ausgehend auf einen Endwert ansteigt (oder abfällt), wobei der Betrag des momentanen Soll-Spulenstromwertes zeitlich in der Mitte zwischen dem Startwert und dem Endwert liegt. Wenn also der Komparator während einer Chopper-Phase anzeigt, dass der momentane tatsächliche Spulenstromwert gleich dem momentanen Soll-Spulenstromwert geworden ist, so kann aus dem Zeitpunkt, zu dem das betreffende Signal am Ausgang des Komparators anliegt, im Vergleich zu dem Zeitpunkt des Mittelpunktes des momentanen Soll-Spulenstromwertes in der betreffenden Chopper-Phase ein Rückschluss auf die tatsächliche Höhe der Stromabweichung zwischen dem Istwert und dem Sollwert des Spulenstroms gezogen werden. Diese Abweichung kann wiederum als Eingabewert zum Beispiel für einen Regler, vorzugsweise einen PI-Regler, verwendet werden, um dessen Schrittweite, mit dem das Tastverhältnis der PWM-Spannung wie oben erläutert verändert wird, an die Höhe dieser Stromabweichung anzupassen.

Die Amplitude des Stroms in der Spule, in der der betragsmäßig niedrigere Strom fließt, stellt sich automatisch auf den richtigen Wert ein, wenn die Tastverhältnisse der PWM-Spannungen an beiden Spulen proportional nachgeregelt werden, da der Innenwiderstand der Spulen eines Motors aufgrund des symmetrischen Aufbaus des Motors als zumindest weitgehend identisch angenommen werden kann. Ein Pendeln der tatsächlichen Stromamplituden aufgrund der Aktivität des Reglers um die Amplitude des Soll-Spulenstromes ist aufgrund der zeitversetzten Regelung des Stroms in beiden Spulen weitestgehend identisch und erzeugt deshalb keinen relevanten Fehler im elektrischen Winkel zwischen den beiden Spulen.

Bei einer Drehung des Motors (zumindest oberhalb einer vorbestimmten Mindest-Drehzahl) wird der oben beschriebene Algorithmus für den Motor-Stillstand vorzugsweise nicht weiter angewendet werden, da sich prinzipbedingt durch die Gegen-EMK des Motors und durch die Induktivität der Spulen eine mit steigender Drehzahl steigende Phasenverschiebung zwischen der effektiven, an die Spulen angelegten Spannung und dem resultierenden effektiven Spulenstrom ergibt. Der Winkel dieser Phasenverschiebung ist vorab nicht bekannt, da er sowohl von der Drehzahl des Motors und den Motoreigenschaften als auch von der Last an dem Motor abhängig ist. Wenn dieser Phasenwinkel jedoch nicht berücksichtigt wird, ergibt sich eine fehlerhafte hinterherlaufende Regelung des Spulenstroms, da der momentane Spulenstromwert nicht dem momentanen Soll-Spulenstromwert entsprechend kann.

Dies ist schematisch in Figur 3(A) und 3(B) angedeutet: Figur 3(A) zeigt den Verlauf einer effektiven, an eine Motorspule angelegten Spannung U, die in der Spannungsgeregelten Betriebsart gemäß obiger Beschreibung aus einem vorgegebenen Soll-Spulenstromverlauf erzeugt wurde (und sich aus den Chopperzyklen 1, 2,...n gemäß Figur 2 zusammensetzt und aus der effektiven PWM-Spannung gemäß Figur 2(C) resultiert), sowie der damit erzeugte tatsächliche Spulenstrom I bei niedriger Drehzahl des Motors mit vernachlässigbarem Phasenversatz zwischen Strom I und Spannung U. Im Vergleich dazu zeigt Figur 3(B) den Phasenversatz zwischen Strom I und Spannung U bei höherer Drehzahl des Motors, bei der der tatsächliche Spulenstrom I der angelegten Spulenspannung U nacheilt.

Weiterhin ist zu beachten, dass es erforderlich ist, beim Drehen des Motors den tatsächlichen Spulenstrom schneller nachregeln zu können als beim Stillstand des Motors, da beispielsweise die Beschleunigung des Motors auf eine höhere Drehzahl in wenigen Millisekunden, d.h. im Halb- oder Vollschrittbetrieb innerhalb weniger Vollschritt-Zyklen bzw. im Mikroschrittbetrieb innerhalb weniger Sinus-Zyklen möglich sein soll.

Diese beiden Probleme bei der Spannungsgeregelten Betriebsart werden vorzugsweise dadurch gelöst, dass beim Drehen des Motors in der ersten Betriebsart der tatsächliche Spulenstrom durch Skalierung des Tastverhältnisses der an die Spulen angelegten effektiven PWM-Spannung (Figur 2(C)) mittels eines Reglers, vorzugsweise eines PI-Reglers, geregelt wird, mit dem eine relativ schnelle Einschwingzeit bei gleichzeitig relativ geringer Regelabweichung erzielt werden kann.

Dies wird vorzugsweise wie folgt realisiert:
Beim Starten des Motors, d.h. mit dem Beginn einer Drehbewegung, wird für den Motor zunächst der letzte, während des Stillstands des Motors ermittelte Spulen-Stromwert verwendet. Da jedoch, wie oben bereits erwähnt wurde, die Phasenverschiebung zwischen der an die Motorspule angelegten PWM-Spannung und dem tatsächlichen Spulenstrom nicht vernachlässigbar und auch nicht bekannt ist, ist es nicht möglich, zum Zeitpunkt des Anlegens der PWM-Spannung zu bestimmen, ob der zu diesem Zeitpunkt gemessene tatsächliche Spulen-Stromwert mit dem vorgegebene Soll-Spulenstromwert übereinstimmt.

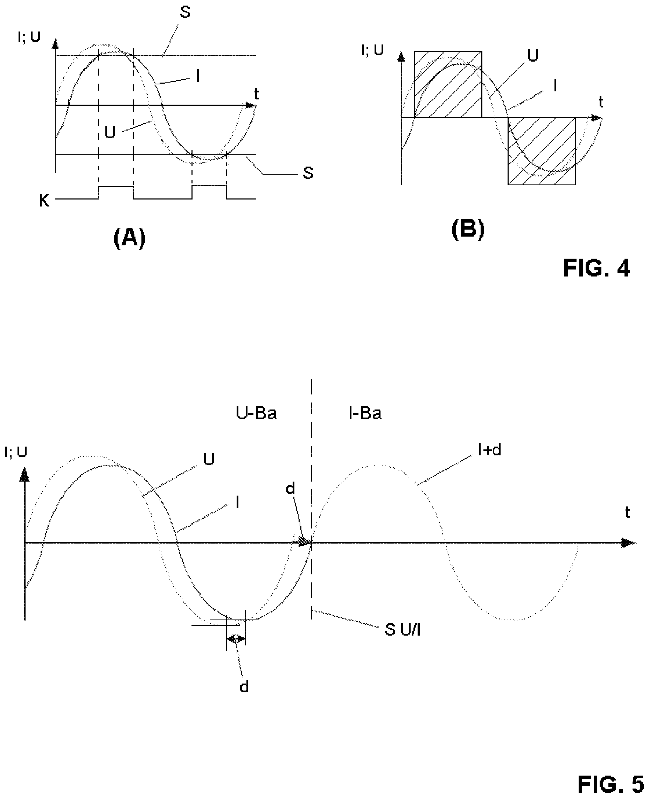

Deshalb wird zunächst gemäß Figur 4(A) eine Stromschwelle S in Form eines konstanten Spulen-Stromwertes in der Weise berechnet, dass dieser während einer Sinus-Halbwelle des vorgegebenen Soll-Spulenstromverlaufes nur für eine relativ kurze festgelegte Zeitdauer von z. B. zwischen etwa 5% bis 20% der Zeitdauer der Sinus-Halbwelle erreicht bzw. überschritten wird. Dann wird während jeder Chopper-Phase der tatsächliche Spulenstrom I gemessen, mit der Stromschwelle S verglichen und ermittelt, wie lang die Zeitdauer während der Sinus-Halbwelle ist, während der die berechnete Stromschwelle S tatsächlich von dem tatsächlichen Spulenstrom I erreicht und überschritten wird.

Anhand des Verhältnisses zwischen dem festegelegten Sollwert und dem Istwert dieser Zeitdauern wird dann mittels des Reglers (vorzugsweise eines PI-Reglers) in der darauf folgenden Sinus-Halbwelle des Soll-Spulenstroms das Tastverhältnis der an die betreffende Spule angelegten PWM-Spannung erhöht, wenn der Istwert der Zeitdauer kleiner war als deren Sollwert, und das Tastverhältnis (und damit die effektive an die Spule angelegte Spannung) vermindert, wenn die tatsächliche Zeitdauer größer war als die festgelegte Zeitdauer. Gleichzeitig wird in dieser Sinus-Halbwelle wiederum der Istwert der genannten Zeitdauer gemessen und mit dem Sollwert verglichen, so dass gleichzeitig in der nächsten Sinus-Halbwelle das Tastverhältnis der dann angelegten PWM-Spannung gegebenenfalls erneut entsprechend angepasst werden kann.

Da bei einem 2-Phasen Motor zwei Spulen vorhanden sind, können also in jeder elektrischen Periode der Spulenströme vier Halbwellen auf diese Weise gemessen werden, so dass in jedem Vollschritt ein neues Messergebnis verfügbar wird und der Spulenstrom nachgeregelt werden kann.

Auf diese Weise ist es möglich, wesentlich schneller auf eine Abweichung des tatsächlichen Spulenstromwertes von einem Soll-Spulenstromwert zu reagieren, als durch einen reinen Vergleich, ob der Soll-Spulenstromwert überhaupt erreicht wurde.

In Figur 4(A) ist dieser Vergleich anhand eines angenommenen tatsächlichen Spulenstromverlaufes I, der durch eine an die Spule angelegte (PWM-) Spannung U erzeugt wird, dargestellt. Die Stromschwelle, die (vorzugsweise für jede Sinus-Halbwelle) so berechnet wurde bzw. wird, dass sie nur während einer relativ kurzen Zeitdauer einer Sinus-Halbwelle des vorgegebenen Soll-Spulenstromverlaufes erreicht und überschritten wird, ist mit dem Buchstaben S bezeichnet. Weiterhin ist das Ausgangssignal K eines Komparators dargestellt, das immer dann einen hohen Pegel annimmt, wenn der tatsächliche Spulenstromwert I die Stromschwelle S erreicht und überschreitet.

Bei der Festlegung der Stromschwelle S ist noch folgendes zu berücksichtigen: wie oben mit Bezug auf Figur 2(C) bereits erläutert wurde, kann ein tatsächlicher Spulenstrom nicht mehr gemessen werden, wenn das Tastverhältnis der an die Spule angelegten effektiven PWM-Spannung zu gering bzw. die resultierende effektive Spannung zu niedrig wird. Der Zeitbereich, innerhalb dessen der tatsächliche Spulenstrom gemessen werden kann (schraffierter Bereich A in Figur 2(C)), ist beispielhaft in Figur 4(B) wiederum schraffiert angedeutet.

Da also zur Messung des tatsächlichen Spulenstroms eine bestimmte Mindesthöhe der an die betreffende Spule angelegten effektiven Spannung (bzw. deren Tastverhältnisses) erforderlich ist, kann es bei einer großen Phasenverschiebung des tatsächlichen Spulenstroms dazu kommen, dass die tatsächliche Zeitdauer der Überschreitung der Stromschwelle S während einer Sinus-Halbwelle größer ist, als die gemessene Zeitdauer dieser Überschreitung. In der Darstellung der Figur 4(B) kann nämlich der tatsächliche Spulenstromwert I nur innerhalb des schraffierten Bereiches mit der Stromschwelle S (wie in Figur 4(A)) verglichen werden. Umgekehrt vermindert sich also die Zeitdauer der tatsächlich gemessenen Überschreitung der Stromschwelle S mit steigender Phasenverschiebung (d.h. insbesondere bei hoher Drehzahl). Dies hat zur Folge, dass der PI-Regler somit den tatsächlichen Spulenstromwert stärker anheben würde, als dies dem Soll-Spulenstromverlauf entspricht.

Wenn dieser Fehler einen vorbestimmten Wert übersteigt, sollte deshalb von der Spannungsgeregelten Betriebsart auf die Stromgeregelte Betriebsart umgeschaltet werden. Üblicherweise wird die Umschalt-Geschwindigkeit bzw. Umschalt-Drehzahl des Motors bei einigen zehn oder wenigen 100 Hz der Frequenz des Spulenstromes festgelegt. Innerhalb dieses Bereiches ist die Phasenverschiebung nämlich meist moderat, so dass die Messung korrekt erfolgen kann.

Vorzugsweise wird bei der Umschaltung von der ersten in die zweite Betriebsart und noch die Tatsache berücksichtigt, dass die in der Spannungsgesteuerten Betriebsart entstandene Phasenverschiebung des tatsächlichen Spulenstroms I bei der Umschaltung zu einem Sprung in der Bewegung des Motors führen würde, da in der Stromgeregelten Betriebsart der Soll-Spulenstrom durch Schalten des tatsächlichen Spulenstroms geregelt wird und somit eine Phasenverschiebung zwischen Spulenspannung und Spulenstrom keine Rolle spielt bzw. nicht berücksichtigt zu werden braucht.

Zu diesem Zweck wird die Phasenverschiebung vor dem Zeitpunkt der Umschaltung in die Stromgeregelte Betriebsart (zweite Betriebsart) ermittelt.

Dies ist beispielsweise möglich, indem insbesondere anhand des Ausgangssignals des Komparators in der Spannungsgeregelten Betriebsart der Zeitpunkt ermittelt wird, der in der Mitte zwischen dem Beginn und dem Ende der Überschreitung der Stromschwelle S durch den tatsächlichen Spulenstromverlauf I während einer Sinus-Halbwelle liegt. Zu diesem Zeitpunkt erreicht also der tatsächliche Spulenstrom seinen Scheitelwert. Vorzugsweise kann ein solcher Zeitpunkt auch durch Mittelung mehrerer, während mehrerer Sinus-Halbwellen ermittelter Zeitpunkte dieser Art berechnet werden. Wenn man diesen Zeitpunkt dann mit dem Zeitpunkt des Auftretens des Scheitelwertes des vorgegebenen Soll-Spulenstroms und damit des Scheitelwertes der an die betreffende Spule angelegten effektiven Spannung vergleicht, ergibt sich aus dem Abstand dieser Zeitpunkte die zeitliche Verzögerung und damit die gesuchte Phasenverschiebung des tatsächlichen Spulenstroms.

Diese Art der Ermittlung der Phasenverschiebung wird insbesondere schaltungstechnisch dann bevorzugt, wenn die Stromschwelle S zum Zweck der oben beschriebenen Regelung des Tastverhältnisses der PWM-Spannung während der ersten Betriebsart beim Drehen des Motors ohnehin benötigt und festgelegt wird. Andererseits ist es aber auch möglich, die Höhe der in der ersten Betriebsart an die Spulen angelegten Spannung (bzw. das Tastverhältnis im Falle einer PWM-Spannung) auf der Basis einen bloßen Vergleiches der Ist- und Soll-Spulenstromwerte in jeder Chopper-Phase (wie es oben für den Fall des Stillstands der Motors beschrieben wurde) auch beim Drehen des Motors zu regeln. In diesem Fall wird die Stromschwelle S wie oben beschrieben vorzugsweise nur zur Ermittlung der Phasenverschiebung genutzt.

Sofern eine entsprechend niedrige Motordrehzahl für die Umschaltung von der ersten Betriebsart in die zweite Betriebsart gewählt bzw. vorbestimmt wurde, kann diese Phasenverschiebung ggf. auch so klein sein, dass sie vernachlässigbar ist und / oder bei einer gegebenen Anwendung des Motors nicht berücksichtigt zu werden braucht, so dass also die Phasenverschiebung zwar ermittelt, der Soll-Spulenstrom zum Zeitpunkt der Umschaltung aber nicht mit der ermittelten Phasenverschiebung beaufschlagt wird, insbesondere wenn diese z.B. unter einem vorbestimmten Grenzwert liegt.

Üblicherweise wird aber zum Zeitpunkt der Umschaltung von der Spannungsgeregelten Betriebsart in die Stromgeregelte Betriebsart der vorgegebene Soll-Spulenstrom mit dieser Phaseverschiebung beaufschlagt, so dass also ein Phasensprung in dem tatsächlichen Spulenstrom vermieden werden kann. Diese Phasenverschiebung wird dann auch während der Dauer der Stromgeregelten Betriebsart beibehalten. Unter der Annahme, dass beim Abbremsen des Motors bzw. einer Verringerung seiner Drehzahl die Umschaltung in die Spannungsgeregelte Betriebsart wieder bei der gleichen Umschalt-Geschwindigkeit des Motors erfolgen soll und sich somit die Voraussetzungen nicht wesentlich verändert haben, kann diese Phasenverschiebung beim Zurückschalten in die erste Betriebsart wieder rückgängig gemacht werden.

Im Figur 5 ist dies grafisch dargestellt. Der linke Teil der Grafik zeigt den Verlauf der an die betreffende Motorspule angelegten effektiven Spannung U (entsprechend dem Soll-Spulenstromverlauf), den Verlauf des dadurch erzeugten tatsächlichen Spulenstroms I sowie die Phasenverschiebung d zwischen beiden während der Spannungsgeregelten Betriebsart U-Ba. Der rechte Teil der Grafik zeigt den mit der Phasenverschiebung d beaufschlagten tatsächlichen Spulenstromverlauf I+d während der Stromgeregelten Betriebsart. Zwischen den beiden Betriebsarten befindet sich der mit einer gestrichelten Linie angedeutete Umschalt-Zeitpunkt S U/I.

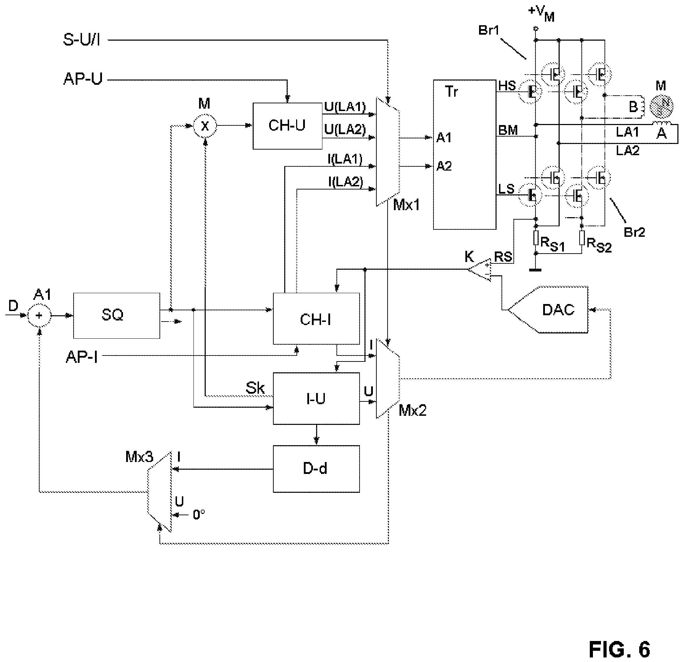

Figur 6 zeigt ein Blockschaltbild einer beispielhaften Ausführungsform einer Schaltungsanordnung zur Durchführung der Verfahren.

Die Schaltungsanordnung umfasst als an sich bekannte Komponenten eine integrierte Motor-Treiberschaltung Tr, mit der über erste Ausgänge HS (High Side), LS (Low Side) und BM (Brückenmittelpunkt) eine zwischen einer Versorgungsspannung +V_{M} und Masse liegende erste Brückenschaltung Br1 angesteuert wird, um in der Spannungsgesteuerten bzw. Spannungsgeregelten (ersten) Betriebsart eine erste PWM-Spannung U(LA1) gemäß Figur 2(A) in einer ersten Richtung und eine zweite PWM-Spannung U(LA2) gemäß Figur 2(B) in der entgegengesetzten zweiten Richtung an eine erste Spule A des Motors M anzulegen, so dass eine effektive PWM-Spannung gemäß Figur 2(C) entsteht.

Ferner dienen die Treiberschaltung Tr und die erste Brückenschaltung Br1 dazu, in der Stromgeregelten (zweiten) Betriebsart die Chopper-Phasen, wie oben mit Bezug auf Figur 1 beschrieben wurde, zu schalten, um die Ströme I(LA1), I(LA2) mit entsprechenden Polaritäten in die erste Spule A einzuprägen.

Die in beiden Betriebsarten tatsächlich durch die erste Spule A fließenden Spulenströme werden durch den Spannungsabfall an einem ersten Messwiderstand R_{S1} im Fußpunkt der Brückenschaltung gemessen.

Die zweite Spule B des Motors M (in diesem Beispielsfall ein 2-Phasen-Motor) ist in eine zweite Brückenschaltung Br2 mit einem zweiten Messwiderstand R_{S2} geschaltet, die in entsprechender Weise wie oben beschrieben über zweite Ausgänge HS (High Side), LS (Low Side) und BM (Brückenmittelpunkt) der Treiberschaltung Tr, die hier nicht dargestellt sind, angesteuert wird.

Die im Folgenden erläuterten Komponenten der Schaltungsanordnung, mit der die Treiberschaltung Tr über deren Eingänge A1, A2 angesteuert wird, sind nur für eine der beiden Spulen (nämlich die erste Spule A) des Schrittmotors M gezeigt. Diese Komponenten sind somit noch einmal für die andere Motorspule B (und ggf. für jede weitere Motorspule im Fall eines Mehrphasen-Schrittmotors) zu realisieren und mit entsprechenden Eingängen B1, B2 (nicht dargestellt) der Treiberschaltung Tr zu verbinden.

Die Schaltungsanordnung umfasst somit einen ersten Chopper CH-U für die Spannungsgesteuerte bzw. die Spannungsgeregelte (erste) Betriebsart, an dessen beiden Ausgängen die erste PWM-Spannung U(LA1) gemäß Figur 2(A) und die zweite PWM-Spannung U(LA2) gemäß Figur 2(B) anliegt.

Weiterhin ist ein zweiter Chopper CH-I für die Stromgeregelte (zweite) Betriebsart vorgesehen, an dessen beiden ersten Ausgängen die für die beiden Polaritäten der Spulenströme I(LA1), I(LA2) erzeugten Schaltsignale der Chopper-Phasen anliegen.

Diese Ausgänge der beiden Chopper CH-U, CH-I sind über einen ersten Multiplexer Mx1 mit den Eingängen A1, A2 der Treiberschaltung Tr verbunden. Der erste Multiplexer Mx1 wird mittels eines Schaltsignals S-U/I zur Umschaltung zwischen der ersten und der zweiten Betriebsart in Abhängigkeit von der Geschwindigkeit bzw. der Drehzahl des Motors geschaltet.

Die entsprechend der Polarität der Spulenströme an dem Messwiderstand R_{S1} abfallende positive bzw. negative Spannung RS wird einem ersten Eingang eines Komparators K zugeführt, an dessen zweitem Eingang der Ausgang eines Digital/Analog-Wandlers DAC anliegt, mit dem die wie folgt beschrieben vorzugsweise in der digitalen Ebene erzeugten Soll-Spulenstromwerte in analoge Spannungswerte umgewandelt werden, um den tatsächlichen Spulenstromwert mit dem Soll-Spulenstromwert zu vergleichen.

Das Ausgangssignal am Ausgang des Komparators K wird einem ersten Eingang einer Einheit I-U zur Stromnachführung des ersten Choppers CH-U sowie einem ersten Eingang des zweiten Choppers CH-I zugeführt.

Ein vorgegebener Soll-Motorstrom D liegt an einem ersten Eingang eines Addierers A1 der Schaltungsanordnung an. Dieser Soll-Motorstrom wird über einen Ausgang des Addierers A1 einem Sequenzer SQ mit einer Sinus-/Cosinus-Tabelle zugeführt, mit dem an dessen ersten bzw. zweiten Ausgang die beiden phasenverschobenen Soll-Spulenströme für die erste bzw. die zweite Spule A, B erzeugt werden. Wie schon erwähnt, werden nachfolgend nur die Schaltungskomponenten und die Signalverarbeitung für die erste Spule A beschrieben.

Der Soll-Spulenstrom am Ausgang des Sequenzers SQ (Stromvorgabe) wird einem ersten Eingang eines Multiplizierers M, einem zweiten Eingang des zweiten Choppers CH-I, sowie einem zweiten Eingang der ersten Einheit I-U zugeführt.

Die Einheit I-U erzeugt an ihrem mit einem zweiten Multiplexer Mx2 verbundenen ersten Ausgang in Abhängigkeit von dem an ihrem ersten Eingang anliegenden Ausgangssignal des Komparators K sowie dem an ihrem zweiten Eingang anliegenden Soll-Spulenstrom einen Vergleichs-Spulenstromwert U für die erste Betriebsart, der über den zweiten Multiplexer Mx2, der durch das gleiche Schaltsignal S-U/I geschaltet wird wie der erste Multiplexer Mxl, während der ersten Betriebsart an den Eingang des Digital/Analog-Wandlers DAC angelegt wird.

Die Einheit I-U erzeugt weiterhin an einem zweiten Ausgang, der mit einem zweiten Eingang des Multiplizierer M verbunden ist, ein Signal Sk zur Skalierung des an dem ersten Eingang des Multiplizierers M anliegenden Soll-Spulenstroms. Der Ausgang des Multiplizierers M, an dem somit die skalierte Stromvorgabe anliegt, ist mit einem ersten Eingang des ersten Choppers CH-U verbunden.

An einem zweiten Eingang des ersten Choppers CH-U liegt ein der Schaltungsanordnung zugeführtes Signal AP-U zur Einstellung von Arbeitsparametern des ersten Choppers CH-U an.

Der erste Chopper CH-U erzeugt in Abhängigkeit von den an seinen beiden Eingängen anliegenden Signalen die erste und die zweite PWM-Spannung U(LA1), U(LA2) gemäß Figur 2(A) bzw. 2(B), die dann mittels der Treiberschaltung Tr und der Brückenschaltung Br in entgegengesetzten Richtungen an die erste Spule A angelegt werden, um die effektive PWM-Spannung gemäß Figur 2(C) zu erzeugen.

Der zweite Chopper CH-I weist einen dritten Eingang für ein der Schaltungsanordnung zugeführtes Signal AP-I zur Einstellung von Arbeitsparametern des zweiten Choppers CH-I auf.

Der zweite Chopper CH-I erzeugt an seinem mit dem zweiten Multiplexer Mx2 verbundenen zweiten Ausgang in Abhängigkeit von dem an seinem ersten Eingang anliegenden Ausgangssignal des Komparators K, dem an seinem zweiten Eingang anliegenden Soll-Spulenstrom, sowie dem an seinem dritten Eingang anliegenden Signal AP-I einen Soll-Spulenstromwert I für die zweite Betriebsart, der über den zweiten Multiplexer Mx2 während der zweiten Betriebsart an den Eingang des Digital/Analog-Wandlers DAC angelegt wird.

Die Schaltungsanordnung umfasst schließlich noch einen Detektor D-d zur Erfassung der Phasenverschiebung d zwischen der an die Spule angelegten effektiven Spannung und dem tatsächlichen Spulenstrom gemäß Figur 5 während der ersten Betriebsart und (kurz) vor der Umschaltung in die zweite Betriebsart. Die wie oben beschrieben ermittelte Phasenverschiebung wird einem ersten Eingang eines dritten Multiplexers Mx3 zugeführt, an dessen zweitem Eingang ein eine Phasenverschiebung von 0° repräsentierender Wert anliegt. Der dritte Multiplexer Mx3 wird durch das gleiche Schaltsignal S-U/l geschaltet wie der erste und der zweite Multiplexer Mxl, Mx2, so dass also im Moment der Umschaltung in die zweite Betriebsart der erste Eingang des dritten Multiplexers Mx3 an dessen Ausgang durchgeschaltet wird, der mit einem zweiten Eingang des Addierers A1 verbunden ist. Auf diese Weise wird der zugeführte Soll-Motorstrom D mit dieser Phasenverschiebung beaufschlagt. Wahrend der ersten Betriebsart ist der zweite Eingang des dritten Multiplexers Mx3 an den zweiten Eingang des Addierers A1 durchgeschaltet, so dass der zugeführte Soll-Motorstrom D mit keiner Phasenverschiebung (0°) beaufschlagt wird.

Ein besonderer Vorteil der Schaltungsanordnung besteht u.a. darin, dass die gleichen Schaltungsteile, die bei der Stromgeregelten (zweiten) Betriebsart zur Erfassung und Auswertung des tatsächlichen Spulenstromes dienen (d.h. Digital/Analog-Wandler DAC, Komparator K und Messwiderstand RS1), auch für die Regelung des Tastverhältnisses bei der Spannungsgeregelten (ersten) Betriebsart eingesetzt werden, so dass eine aufwändige Integration zusätzlicher analoger Komponenten in eine integrierte Schaltung nicht erforderlich ist.

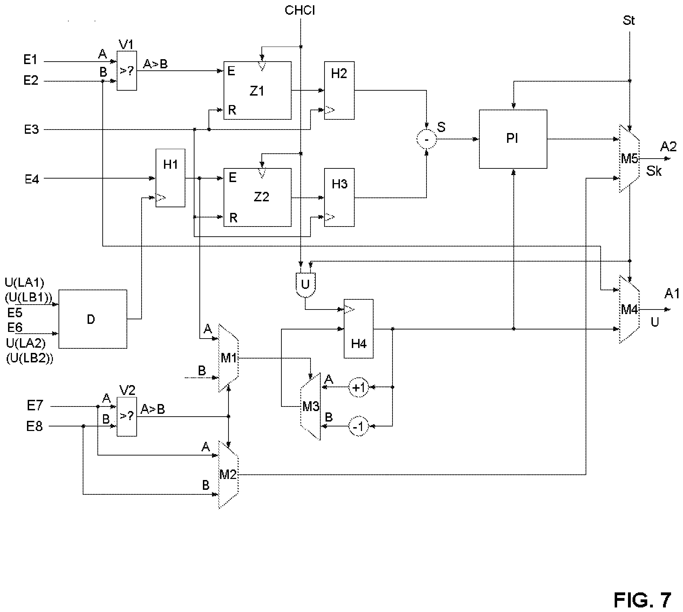

Figur 7 zeigt schließlich beispielhaft ein Prinzipschaltbild der Einheit I-U zur Stromnachführung des ersten Choppers CH-U.

Die Einheit I-U umfasst einen ersten Zähler Z1, einen zweiten Zähler Z2, einen ersten Vergleicher V1, einen zweiten Vergleicher V2, einen Detektor D, ein erstes Halteregister H1, ein zweites Halteregister H2, ein drittes Halteregister H3, ein viertes Halteregister H4, einen ersten Multiplexer M1, einen zweiten Multiplexer M2, einen dritten Multiplexer M3, einen vierten Multiplexer M4, einen fünften Multiplexer M5, einen PI-Regler PI, einen Subtrahierer S, und ein logisches UND-Gatter U.

Die Einheit I-U weist insgesamt acht Eingänge E1 bis E8 und zwei Ausgänge A1, A2 auf.

An dem ersten Eingang E1, der mit einem ersten Eingang A des ersten Vergleichers V1 verbunden ist, liegt der sinus-Ausgang des Sequenzers SQ an.

An dem zweiten Eingang E2, der mit einem zweiten Eingang B des ersten Vergleichers V1 verbunden ist, liegt der Wert der mit Bezug auf Figur 4 erläuterten Stromschwelle S an.

An dem dritten Eingang E3, der mit einem Rücksetz-Eingang des ersten und zweiten Zählers Z1, Z2 sowie einem Takteingang des zweiten und dritten Halteregisters H2, H3 verbunden ist, liegt ein Startsignal an, das den Beginn einer Strom-Halbwelle des Motorstroms anzeigt.

An dem vierten Eingang E4, der mit einem Eingang des ersten Halteregisters H1 verbunden ist, liegt der Ausgang des Komparators K an.

An dem fünften und sechsten Eingang E5, E6, die jeweils mit einem Eingang des Detektors D verbunden sind, liegt das erste bzw. das zweite Ausgangssignal U(LA1), U(LA2) des ersten Choppers CH-U (siehe Figur 2(A) und 2(B)) an.

An dem siebten Eingang E7, der mit einem ersten Eingang A des zweiten Vergleichers V2 verbunden ist, liegt der sinus-Ausgang des Sequenzers SQ an, während an dem achten Eingang E8, der mit einem zweiten Eingang B des zweiten Vergleichers V2 verbunden ist, der Cosinus-Ausgang des Sequenzers SQ anliegt.

Ferner liegt an der Einheit I-U auch ein Chopper-Taktsignal CHCI an, das einem Takteingang des ersten und des zweiten Zählers Z1, Z2 sowie einem ersten Eingang des UND-Gatters U zugeführt wird. Ein der Einheit I-U zugeführtes Schaltsignal St, das einen Stillstand des Motors anzeigt, dient zum Umschalten des vierten und des fünften Multiplexers M4, M5. Es wird außerdem einem ersten Eingang des PI-Reglers PI zum Laden von dessen Startwerten sowie dem zweiten Eingang des UND-Gatters U zugeführt.

Der erste Ausgang A1 der Einheit I-U, der den Ausgang des vierten Multiplexers M4 darstellt und an dem der Soll-Spulenstromwert U für die erste Betriebsart anliegt, ist mit einem Eingang des zweiten Multiplexer Mx2 der Schaltungsanordnung verbunden und wird in der ersten Betriebsart über diesen dem Digital/Analog-Wandler DAC zugeführt.

Der zweite Ausgang A2 der Einheit I-U, der den Ausgang des fünften Multiplexers M5 darstellt und an dem das Signal Sk zur Skalierung des an dem ersten Eingang des Multiplizierers M anliegenden Soll-Spulenstroms anliegt, ist mit dem zweiten Eingang des Multiplizierers M verbunden.

Die in Figur 7 gezeigte Einheit I-U dient dazu, während der Spannungsgeregelten (ersten) Betriebsart zum einen beim Stillstand des Motors die stärker bestromte Spule auszuwählen und gemäß obiger Beschreibung anzusteuern, und zum anderen während der Drehung des Motors während jeder Halbwelle der Spulenströme die Anzahl der Chopper-Phasen zu zählen, in denen einerseits der vorgegebene Soll-Spulenstromwert und andererseits der tatsächliche Spulenstromwert die festgelegte Stromschwelle S, wie es im Zusammenhang mit Figur 4 beschrieben wurde, erreicht und überschreitet, um in Abhängigkeit von der Differenz dieser Anzahlen den PI-Regler zum Zwecke der Skalierung des Tastverhältnisses der an die Spulen angelegten effektiven PWM-Spannung zu regeln.

Im Einzelnen wird die stärker bestromte Spule im Stillstand des Motors mittels des zweiten Vergleichers V2 bestimmt. Das entsprechende Selektionssignal am Ausgang des zweiten Vergleichers V2 schaltet den vorgegebenen Soll-Stromverlauf der stärker bestromten Spule mittels des zweiten Multiplexers M2 sowie des fünften Multiplexers M5 an den Multiplizierer M (Figur 6) zur Skalierung der Sinus- bzw. Cosinus-Stromwerte aus dem Sequenzer SQ für den ersten Chopper CH-U durch.

Außerdem schaltet das Selektionssignal den ersten Multiplexer M1, an dessen Eingängen jeweils das in dem ersten Halteregister H1 gespeicherte Ausgangssignal des Komparators K als Ergebnis des Vergleiches zwischen den tatsächlichen Spulenströmen in den beiden Motorspulen A, B einerseits mit dem betreffenden Soll-Spulenstrom andererseits anliegt.

Das Ausgangssignal des ersten Multiplexers M1 schaltet wiederum den dritten Multiplexer M3, so dass das Ausgangssignal des vierten Halteregisters H4 (das im Stillstand des Motors über den vierten Multiplexer M4 als Sollwertsignal dem Digital/ Analog-Wandler DAC zugeführt wird) um einen Wert von 1 erhöht oder vermindert wird. Dadurch pendelt, wie oben erläutert wurde, der tatsächliche, durch entsprechende Einstellung des effektiven Tastverhältnisses erzielte Spulenstrom um den betreffenden Soll-Spulenstrom. Dieser wird entsprechend der Auflösung der PWM-Spannung im Mittel erreicht.

Das Chopper-Taktsignal CHCI wird dabei über das UND-Gatter U nur dann an den Takteingang des vierten Halteregisters H4 geführt, wenn das den Stillstand des Motors anzeigende Schaltsignal St den Wert 1 aufweist.

Wenn sich der Motor dreht, schaltet das Schaltsignal St den vierten und den fünften Multiplexer M4, M5 so, dass einerseits die an dem zweiten Eingang E2 der Einheit I-U anliegende Stromschwelle S über den vierten Multiplexer M4 dem Digital/Analog-Wandler DAC zugeführt wird, und andererseits der Ausgang des PI-Reglers PI über den fünften Multiplexer M5 dem Multiplizierer M zur Skalierung der Spannungsvorgabe zugeführt wird.

Mit dem ersten Vergleicher V1 wird dabei der momentane Wert des vorgegebenen Soll-Spulenstroms mit der Stromschwelle S verglichen. Wenn dieser Wert größer ist, als die Stromschwelle S, so wird der Stand des ersten Zählers Z1 mittels des Ausgangssignals des ersten Vergleichers V1 beim Auftreten eines Chopper-Taktsignals CHCI um den Wert 1 erhöht.

Ferner wird das dem vierten Eingang E4 der Einheit I-U zugeführte Ausgangssignal des Komparators K in dem ersten Halteregister H1 gespeichert. Mit dem bevorzugten Takten des ersten Halteregisters H1 mittels eines von dem Detektor D erzeugten Taktsignals wird durch Anlegen des Inhalts des ersten Halteregisters H1 an den Eingang des zweiten Zählers Z2 beim Auftreten des Chopper-Taktsignals CHCI gezählt, wie oft innerhalb einer Halbwelle der tatsächliche Spulenstrom die Stromschwelle S erreicht und überschritten hat. Das von dem Detektor D erzeugte Taktsignal bestimmt dabei den Zeitpunkt, zu dem das Ausgangssignal des Komparators K zwischengespeichert und somit von dem zweiten Zähler Z2 erfasst wird. Das Taktsignal wird in Abhängigkeit von dem an dem Detektor D anliegenden ersten und zweiten Ausgangssignal U(LA1), U(LA2) des ersten Choppers CH-U (siehe Figur 2(A) und 2(B)) sowie unter Berücksichtigung der Blank-Zeit so erzeugt, dass es im Wesentlichen zeitlich in der Mitte jeder Chopper-Phase gemäß Figur 2(C) liegt.

Der Stand des ersten Zählers Z1 wird dem zweiten Halteregister H2 und der Stand des zweiten Zählers Z2 wird dem dritten Halteregister H3 zugeführt. Sobald das den Beginn einer (neuen) Halbwelle des Spulenstroms anzeigende, am dritten Eingang E3 der Einheit I-U anliegende Startsignal auftritt, wird der Stand des ersten und zweiten Zählers Z1, Z2 auf 0 zurückgesetzt und der Inhalt des zweiten und des dritten Halteregisters H2, H3 ausgelesen und mittels des Subtrahierers S voneinander subtrahiert. Die Differenz zwischen beiden, die gemäß obiger Beschreibung im Zusammenhang mit Figuren 4(A) ein Maß dafür darstellt, wie weit der tatsächliche Spulenstrom (der gegenüber der angelegten Spannung Phasenverschoben ist) von dem Soll-Spulenstrom abweicht, wird als Regelabweichung dem Eingang des PI-Reglers PI zugeführt.

Als Startwert wird zu Beginn der Drehung des Motors dem PI-Regler PI der letzte, während des Stillstands des Motors ermittelte Stromwert aus dem vierten Halteregister H4 zugeführt, um einen sprungfreien Übergang zu gewährleisten. Außerdem werden weitere Startwerte in den PI-Regler PI geladen, wenn das den Stillstand des Motors anzeigende Schaltsignals St einen niedrigen Pegel einnimmt. Der Ausgang des PI-Reglers PI wird schließlich über den fünften Multiplexer M5 dem Multiplizierer M zur Skalierung der Spannungsvorgabe zugeführt.

## Patentansprüche

1. Verfahren zum Betreiben eines Schrittmotors mit einem vorgegebenen Soll-Spulenstromverlauf, der sich aus einer Vielzahl von zeitlich aufeinander folgenden momentanen Soll-Spulenstromwerten zusammensetzt, die jeweils mittels Chopper-Phasen in den Motorspulen erzeugt werden, mit einer ersten Betriebsart, in der in jeder Chopper-Phase eine Spannung an mindestens eine der Spulen angelegt wird, deren Amplitude und Polarität zur Erzeugung eines momentanen Soll-Spulenstromwertes eingestellt wird, sowie einer zweiten Betriebsart, in der durch Aktivierung und zeitliche Bemessung von Spulenstrom-Phasen (ON, FD, SD) ein momentaner Soll-Spulenstromwert in die Spulen eingeprägt wird, wobei die erste Betriebsart in einem vorbestimmten niedrigen Drehzahlbereich des Motors und die zweite Betriebsart in einem vorbestimmten, darüber liegenden höheren Drehzahlbereich des Motors aktiviert wird, wobei zur Regelung des Spulenstroms beim Drehen des Motors in der ersten Betriebsart für jede Halbwelle des Soll-Spulenstroms eine Stromschwelle (S) festgelegt wird, die nur während eines vorbestimmten Teils der Dauer der jeweiligen Halbwelle erreicht und überschritten wird, wobei in der Halbwelle die Anzahl derjenigen Chopper-Phasen, in denen der Soll-Spulenstrom die für diese Halbwelle festgelegte Stromschwelle (S) erreicht und überschreitet, mit der Anzahl derjenigen Chopper-Phasen verglichen wird, in denen der gemessene Spulenstrom diese Stromschwelle (S) tatsächlich erreicht und überschreitet, und wobei die Differenz zwischen diesen Anzahlen als Regelabweichung einem Regler (PI) zur Regelung des Spulenstroms in der darauf folgenden Halbwelle zugeführt wird.

2. Verfahren zum Betreiben eines Schrittmotors mit einem vorgegebenen Soll-Spulenstromverlauf, der sich aus einer Vielzahl von zeitlich aufeinander folgenden momentanen Soll-Spulenstromwerten zusammensetzt, die jeweils mittels Chopper-Phasen in den Motorspulen erzeugt werden, mit einer ersten Betriebsart, in der in jeder Chopper-Phase eine Spannung an mindestens eine der Spulen angelegt wird, deren Amplitude und Polarität zur Erzeugung eines momentanen Soll-Spulenstromwertes eingestellt wird, sowie einer zweiten Betriebsart, in der durch Aktivierung und zeitliche Bemessung von Spulenstrom-Phasen (ON, FD, SD) ein momentaner Soll-Spulenstromwert in die Spulen eingeprägt wird, wobei die erste Betriebsart in einem vorbestimmten niedrigen Drehzahlbereich des Motors und die zweite Betriebsart in einem vorbestimmten, darüber liegenden höheren Drehzahlbereich des Motors aktiviert wird, wobei zum Zeitpunkt des Umschaltens von der ersten in die zweite Betriebsart der Soll-Spulenstrom mit einer Phasenverschiebung (d) beaufschlagt wird, mit der der tatsächliche Spulenstrom vor der Umschaltung während der ersten Betriebsart gegenüber der an die betreffende Spule angelegten Spannung verschoben war.

3. Verfahren nach Anspruch 1 oder 2,
bei dem in der ersten Betriebsart jeweils eine PWM-Spannung an jede der Spulen angelegt wird, deren Tastverhältnis zur Einstellung der Amplitude der Spannung an der jeweiligen Spule gesteuert oder geregelt wird.

4. Verfahren nach Anspruch 1 oder 2,
bei dem in der ersten Betriebsart eine erste PWM-Spannung mit einer ersten Polarität und eine zweite PWM-Spannung mit einer dazu entgegengesetzten zweiten Polarität an mindestens eine der Spulen angelegt wird, deren Tastverhältnisse zur Einstellung der Amplitude und der Polarität der an die Spule angelegten Spannung einstellbar sind.

5. Verfahren nach Anspruch 1 oder 2,
bei dem in der ersten Betriebsart der tatsächlich durch mindestens eine der Spulen fließende Strom gemessen und die Amplitude der an die betreffende Spule angelegten Spannung entsprechend geregelt wird.

6. Verfahren nach Anspruch 3,
bei dem in der ersten Betriebsart im Stillstand des Motors das Tastverhältnis nur an jeweils derjenigen Spule des Motors geregelt wird, an der der höhere oder höchste Spulenstrom gemessen wird.

7. Verfahren nach Anspruch 6,
bei dem in der ersten Betriebsart im Stillstand des Motors die an die betreffende Spule angelegte Spannung dadurch geregelt wird, dass das Tastverhältnisse der an die Spule angelegten PWM-Spannung mit jeder Chopper-Phase um eine vorbestimmte Stufe erhöht oder vermindert wird.

8. Verfahren nach Anspruch 1,
bei dem in der ersten Betriebsart beim Drehen des Motors die Amplitude der Spannung mit einem PI-Regler geregelt wird.

9. Verfahren nach Anspruch 2,
bei dem zur Regelung des Spulenstroms beim Drehen des Motors in der ersten Betriebsart für jede Halbwelle des Soll-Spulenstroms eine Stromschwelle (S) festgelegt wird, die nur während eines vorbestimmten Teils der Dauer der jeweiligen Halbwelle erreicht und überschritten wird, wobei in der Halbwelle die Anzahl derjenigen Chopper-Phasen, in denen der Soll-Spulenstrom die für diese Halbwelle festgelegte Stromschwelle (S) erreicht und überschreitet, mit der Anzahl derjenigen Chopper-Phasen verglichen wird, in denen der gemessene Spulenstrom diese Stromschwelle (S) tatsächlich erreicht und überschreitet, und wobei die Differenz zwischen diesen Anzahlen als Regelabweichung einem Regler (PI) zur Regelung des Spulenstroms in der darauf folgenden Halbwelle zugeführt wird.

10. Verfahren nach Anspruch 1,
bei dem die Stromschwelle (S) auf eine solche Höhe festgelegt wird, dass sie durch den Soll-Spulenstrom nur für eine Dauer von zwischen etwa 5% und etwa 20% der Dauer einer Halbwelle erreicht und überschritten wird.

11. Verfahren nach Anspruch 2,
bei dem beim Umschalten von der zweiten in die erste Betriebsart die Beaufschlagung des Soll-Spulenstromes mit der Phasenverschiebung (d) wieder rückgängig gemacht wird.

12. Verfahren nach Anspruch 2,
bei dem die Phasenverschiebung (d) in der ersten Betriebsart anhand der zeitlichen Verzögerung zwischen einem Scheitelwert der an eine der Spulen angelegten Spannung und dem Scheitelwert des dadurch erzeugten, tatsächlich durch diese Spule fließenden Stromes ermittelt wird.

13. Verfahren nach Anspruch 2,
bei dem während jeder Halbwelle des Soll-Spulenstroms eine Stromschwelle (S) festgelegt wird, die nur während eines vorbestimmten Teils der Dauer dieser Halbwelle erreicht und überschritten wird, und die Phasenverschiebung (d) in der ersten Betriebsart anhand der zeitlichen Verzögerung des Mittelpunktes zwischen dem Beginn und dem Ende des Erreichens und Überschreitens der Stromschwelle (S) durch den Soll-Spulenstrom gegenüber dem Mittelpunkt zwischen dem Beginn und dem Ende des Erreichens und Überschreitens der Stromschwelle (S) durch den tatsächlichen Spulenstrom ermittelt wird.

14. Verfahren nach Anspruch 1 oder 2,
bei dem der Schrittmotor im Mikroschrittbetrieb oder im Halb- oder Vollschrittbetrieb jeweils mit einem sinus- oder nichtsinusförmigen Soll-Spulenstromverlauf angesteuert wird.

15. Schaltungsanordnung zum Betreiben eines Schrittmotors mit einem vorgegebenen Soll-Spulenstromverlauf, der sich aus einer Vielzahl von zeitlich aufeinander folgenden momentanen Soll-Spulenstromwerten zusammensetzt, die jeweils mittels Chopper-Phasen in den Motorspulen erzeugt werden, zur Durchführung eines Verfahrens nach Anspruch 1, mit:
einem ersten Chopper (CH-U) für die erste, in einem vorbestimmten niedrigen Drehzahlbereich des Motors aktivierte Betriebsart, mit dem in jeder Chopper-Phase eine PWM-Spannung mit einstellbarem Tastverhältnis und einstellbarer Polarität zur Erzeugung eines momentanen Soll-Spulenstromwertes an mindestens eine der Spulen (A; B) des Motors angelegt werden kann,
einem zweiten Chopper (CH-I) für die zweite, in einem vorbestimmten, darüber liegenden höheren Drehzahlbereich des Motors aktivierte Betriebsart, mit dem durch Aktivierung und zeitliche Bemessung mindestens einer von drei Spulenstrom-Phasen (ON, FD, SD) ein momentaner Soll-Spulenstromwert in die Spulen eingeprägt werden kann, sowie
einem Komparator (K) zum Vergleichen eines tatsächlich durch mindestens eine der Spulen (A; B) fließenden Stroms mit einem vorgegebenen Soll-Spulenstrom, wobei das Ausgangssignal des Komparators (K) einer Einheit (I-U) zur Stromnachführung des ersten Choppers (CH-U) durch Skalierung eines zugeführten Soll-Spulenstroms während der ersten Betriebsart, sowie dem zweiten Choppers (CH-I) zur Aktivierung mindestens einer der drei Spulenstrom-Phasen (ON, FD, SD) während der zweiten Betriebsart zugeführt wird, wobei
die Einheit (I-U) zur Stromnachführung des ersten Choppers (CH-U) einen ersten Zähler (Z1), mit dem während jeder Halbwelle des Soll-Spulenstroms die Anzahl derjenigen Chopper-Phasen gezählt wird, in denen der Soll-Spulenstrom die für diese Halbwelle vorbestimmte Stromschwelle (S) erreicht und überschreitet, sowie einen zweiten Zähler (Z2), mit dem während jeder Halbwelle des Soll-Spulenstroms die Anzahl derjenigen Chopper-Phasen gezählt wird, in denen der gemessene Spulenstromwert diese Stromschwelle (S) erreicht und überschreitet, sowie einen Subtrahierer (S) aufweist, mit dem die Differenz zwischen beiden Anzahlen ermittelt wird, und dessen Ausgang einem Regler (PI) zur Regelung des Spulenstroms in der darauf folgenden Halbwelle zugeführt wird.

16. Schaltungsanordnung zum Betreiben eines Schrittmotors mit einem vorgegebenen Soll-Spulenstromverlauf, der sich aus einer Vielzahl von zeitlich aufeinander folgenden momentanen Soll-Spulenstromwerten zusammensetzt, die jeweils mittels Chopper-Phasen in den Motorspulen erzeugt werden, zur Durchführung eines Verfahrens nach Anspruch 2, mit:
einem ersten Chopper (CH-U) für die erste, in einem vorbestimmten niedrigen Drehzahlbereich des Motors aktivierte Betriebsart, mit dem in jeder Chopper-Phase eine PWM-Spannung mit einstellbarem Tastverhältnis und einstellbarer Polarität zur Erzeugung eines momentanen Soll-Spulenstromwertes an mindestens eine der Spulen (A; B) des Motors angelegt werden kann,
einem zweiten Chopper (CH-I) für die zweite, in einem vorbestimmten, darüber liegenden höheren Drehzahlbereich des Motors aktivierte Betriebsart, mit dem durch Aktivierung und zeitliche Bemessung mindestens einer von drei Spulenstrom-Phasen (ON, FD, SD) ein momentaner Soll-Spulenstromwert in die Spulen eingeprägt werden kann,
einem Komparator (K) zum Vergleichen eines tatsächlich durch mindestens eine der Spulen (A; B) fließenden Stroms mit einem vorgegebenen Soll-Spulenstrom, wobei das Ausgangssignal des Komparators (K) einer Einheit (I-U) zur Stromnachführung des ersten Choppers (CH-U) durch Skalierung eines zugeführten Soll-Spulenstroms während der ersten Betriebsart, sowie dem zweiten Choppers (CH-I) zur Aktivierung mindestens einer der drei Spulenstrom-Phasen (ON, FD, SD) während der zweiten Betriebsart zugeführt wird, und
einem Detektor (D-d) zur Erfassung einer Phasenverschiebung (d) zwischen einer an eine der Spulen (A; B) angelegten effektiven Spannung und dem tatsächlichen Spulenstrom während der ersten Betriebsart, sowie einem Addierer (A1), mit dem der zugeführte Soll-Spulenstrom (D) beim Umschalten in die zweite Betriebsart und während der zweiten Betriebsart mit dieser Phasenverschiebung (d) beaufschlagt wird.

17. Schaltungsanordnung nach Anspruch 15,
bei der der Regler ein PI-Regler (PI) ist, mit dem das Tastverhältnis der PWM-Spannung in der ersten Betriebsart beim Drehen des Motors geregelt wird.

## Claims

1. Method for operating a stepper motor with a specified target coil current course which is composed of a plurality of temporally successive instantaneous target coil current values which are each generated by chopper phases in the motor coils, with a first operating mode in which in each chopper phase a voltage is applied to at least one of the coils, the amplitude and polarity of the applied voltage being adjusted to generate an instantaneous target coil current value, and with a second operating mode in which by activating and timing of coil current phases (ON, FD, SD) a momentary target coil current value is impressed into the coils, wherein the first operating mode is activated in a predetermined low rotational speed range of the motor and the second operating mode is activated in a predetermined higher rotational speed range of the motor, and wherein, for regulating the coil current during rotation of the motor in the first operating mode, a current threshold (S) is fixed during each half-wave of the target coil current such that it is to be reached and exceeded only during a specified part of the duration of the half-wave, wherein in each half-wave the number of those chopper phases in which the target coil current reaches and exceeds the current threshold (S) is compared to the number of those chopper phases in which the measured coil current actually reaches and exceeds the current threshold (S), and wherein the difference between these numbers is fed as a regulation deviation to a regulator (PI) for regulating the coil current in the following half-wave.

2. Method for operating a stepper motor with a specified target coil current course which is composed of a plurality of temporally successive instantaneous target coil current values which are each generated by chopper phases in the motor coils, with a first operating mode in which in each chopper phase a voltage is applied to at least one of the coils, the amplitude and polarity of the applied voltage being adjusted to generate an instantaneous target coil current value, and with a second operating mode in which by activating and timing coil current phases (ON, FD, SD) a momentary target coil current value is impressed into the coils, wherein the first operating mode is activated in a predetermined low rotational speed range of the motor and the second operating mode is activated in a predetermined higher rotational speed range of the motor, wherein, at the time of switching-over from the first to the second operating mode, the target coil current is subjected to a phase shift (d) with which the actual coil current, before the switching-over, was shifted against the voltage applied to the related coil during the first operating mode.

3. A method according to claim 1 or 2,
in which during the first operating mode, a PWM voltage is applied to each of the coils, whose duty factor is controlled or regulated to adjust the amplitude of the voltage across the respective coil.

4. A method according to claim 1 or 2,
in which during the first operating mode, a first PWM voltage having a first polarity and a second PWM voltage having a second polarity opposite thereto are applied to at least one of the coils, the duty factors thereof being adjustable for adjusting the amplitude and the polarity of the voltage applied to the coil.

5. A method according to claim 1 or 2,
in which during the first operating mode, the current actually flowing through at least one of the coils is measured and the amplitude of the voltage applied to the related coil is correspondingly regulated.

6. A method according to claim 3,
in which during the first operating mode at standstill of the motor, the duty factor is controlled only at the respective coil of the motor at which the higher or highest coil current is measured.

7. A method according to claim 6,
in which during the first operating mode at standstill of the motor, the voltage applied to the related coil is regulated with each chopper phase by increasing or reducing the duty factor of the PWM voltage applied to the coil by a specified amount.

8. A method according to claim 1,
in which during the first operating mode during rotation of the motor, the amplitude of the voltage is regulated by a PI-regulator.

9. A method according to claim 2,
in which for regulating the coil current during rotation of the motor in the first operating mode, a current threshold (S) is fixed for each half-wave of the target coil current such that it is to be reached and exceeded only during a specified part of the duration of the respective half-wave, wherein in the half-wave the number of those chopper phases in which the target coil current reaches and exceeds the current threshold (S) fixed for this half-wave is compared to the number of those chopper phases in which the measured coil current actually reaches and exceeds this current threshold (S), and wherein the difference between these numbers is fed as a regulation deviation to a regulator (PI) for regulating the coil current in the following half-wave.

10. A method according to claim 1,
in which the current threshold (S) is set to such a level that it is reached and exceeded by the target coil current only for a duration of between approximately 5% and approximately 20% of the duration of a half-wave.

11. A method according to claim 2,
in which, upon switching from the second to the first operating mode, the impingement of the target coil current with the phase shift (d) is canceled again.

12. A method according to claim 2,
in which the phase shift (d) is determined in the first operating mode by means of the time delay between a peak value of the voltage applied to one of the coils and the peak value of the current generated thereby and actually flowing through this coil.

13. A method according to claim 2,
in which during each half-wave of the target coil current, a current threshold (S) is set which is reached and exceeded only during a specified part of the duration of this half-wave, and the phase shift (d) in the first operating mode is determined by means of the time delay of the center point between the beginning and the end of reaching and exceeding of the current threshold (S) by the target coil current, against the center point between the beginning and the end of reaching and exceeding of the current threshold (S) by the actual coil current.

14. A method according to claim 1 or 2,
in which the stepper motor is controlled in micro-step mode of operation or in half or full step mode of operation each with a sinusoidal or non-sinusoidal target coil current course.

15. Circuit arrangement for operating a stepper motor with a specified target coil current course which is composed of a plurality of temporally successive instantaneous target coil current values which are generated by means of chopper phases in the motor coils, for carrying out a method according to claim 1, comprising:
a first chopper (CH-U) for the first operating mode activated in a specified low rotational speed range of the motor, by means of which in each chopper phase a PWM voltage with adjustable duty factor and adjustable polarity is applied to at least one of the coils (A; B) of the motor, for generating an instantaneous target coil current value,
a second chopper (CH-I) for the second operating mode activated in a specified higher rotational speed range of the motor, by means of which by activation and timing of at least one of three coil current phases (ON, FD, SD) an instantaneous target coil current value can be impressed into the coils, and
a comparator (K) for comparing a current actually flowing through at least one of the coils (A; B), with a specified target coil current, wherein the output signal of the comparator (K) is supplied to a unit (I-U) for current tracking of the first chopper (CH-U) by scaling of a supplied target coil current during the first operating mode, and is supplied to the second chopper (CH-I) to activate at least one of the three coil current phases (ON, FD, SD) during the second operating mode,
wherein the unit (I-U) for current tracking of the first chopper (CH-U) comprises a first counter (Z 1) with which during each half-wave of the target coil current the number of those chopper phases is counted, in which the target coil current reaches and exceeds a fixed current threshold (S), and a second counter (Z 2) with which during each half-wave of the target coil current the number of those chopper phases is counted, in which the measured coil current value reaches and exceeds the current threshold (S), and a subtractor (S) with which the difference between these two counts is determined, and the output of which is fed to a regulator (PI) for regulating the coil current in the subsequent half-wave.

16. A circuit arrangement for operating a stepper motor with a specified target coil current course which is composed of a plurality of temporally successive instantaneous target coil current values which are each generated by means of chopper phases in the motor coils, for carrying out a method according to claim 2, comprising:
a first chopper (CH-U) for the first operating mode activated in a predetermined low speed range of the motor, with which in each chopper phase a PWM voltage with adjustable duty factor and adjustable polarity can be applied to at least one of the coils (A; B) of the motor for generating an instantaneous target coil current value,
a second chopper (CH-I) for the second operating mode activated in a predetermined higher speed range of the motor above the first one, by means of which an instantaneous target coil current value can be impressed on the coils by activating and timing of at least one of three coil current phases (ON, FD, SD),
a comparator (K) for comparing an current actually flowing through at least one of the coils (A; B) with a specified target coil current, wherein the output signal of the comparator (K) is supplied to a unit (I-U) for current tracking of the first chopper (CH-U) by scaling of a supplied target coil current during the first operating mode, and is supplied to the second chopper (CH-I) for activation of at least one of the three coil current phases (ON, FD, SD) during the second operating mode,
and an a detector (D-d) for detecting a phase shift (d) between an effective voltage applied to one of the coils (A; B) and the actual coil current during the first operating mode, and an adder (A1) with which the supplied target coil current (D) is subjected with this phase shift (d) upon switching into the second operating mode and during the second operating mode.

17. A circuit arrangement according to claim 15,
wherein the regulator is a PI regulator (PI) used to regulate the duty factor of the PWM voltage in the first operating mode during rotation of the motor.

## Revendications

1. Procédé pour exploiter un moteur pas à pas avec une courbe de courant de bobine nominal prédéterminée, qui se compose d'une pluralité de valeurs de courant de bobine nominal instantanées se succédant dans le temps, qui sont générées chacune dans les bobines du moteur au moyen de phases de hachage, avec un premier mode de fonctionnement dans lequel, dans chaque phase de hachage, une tension est appliquée à au moins l'une des bobines dont l'amplitude et la polarité sont réglées pour générer une valeur de courant de bobine instantanée nominale, ainsi qu'un deuxième mode de fonctionnement dans lequel une valeur de courant de bobine nominale instantanée est gravée dans les bobines par activation et mesure dans le temps de phases de courant de bobine (ON, FD, SD), dans lequel le premier mode de fonctionnement est activé dans une gamme de vitesses basses prédéterminée du moteur et le deuxième mode de fonctionnement est activé dans une gamme de vitesses plus élevées prédéterminée du moteur, dans lequel, pour la régulation du courant de bobine pendant la rotation du moteur dans le premier mode de fonctionnement, il est fixé pour chaque demi-onde du courant de bobine nominal un seuil de courant (S) qui n'est atteint et dépassé que pendant une partie prédéterminée de la durée de la demi-onde respective, dans lequel, dans la demi-onde, le nombre des phases de hachage dans lesquelles le courant de bobine nominal atteint et dépasse le seuil de courant (S) fixé pour cette demi-onde, est comparé au nombre des phases de hachage dans lesquelles le courant de bobine mesuré atteint et dépasse effectivement ce seuil de courant (S), et dans lequel la différence entre ces nombres est délivrée en tant qu'écart de régulation à un régulateur (PI) en vue de la régulation du courant de bobine dans la demi-onde suivante.

2. Procédé pour exploiter un moteur pas à pas avec une courbe de courant de bobine nominal prédéterminée, qui se compose d'une pluralité de valeurs de courant de bobine nominal instantanées se succédant dans le temps, qui sont générées chacune dans les bobines du moteur au moyen de phases de hachage, avec un premier mode de fonctionnement dans lequel, dans chaque phase de hachage, une tension est appliquée à au moins l'une des bobines dont l'amplitude et la polarité sont réglées pour générer une valeur de courant de bobine instantanée nominale, ainsi qu'un deuxième mode de fonctionnement dans lequel une valeur de courant de bobine nominale instantanée est gravée dans les bobines par activation et mesure dans le temps de phases de courant de bobine (ON, FD, SD), dans lequel le premier mode de fonctionnement est activé dans une gamme de vitesses basses prédéterminée du moteur et le deuxième mode de fonctionnement est activé dans une gamme de vitesses plus élevées prédéterminée du moteur, dans lequel, au moment de la commutation du premier au deuxième mode de fonctionnement, le courant de bobine nominal est soumis à un déphasage (d) avec lequel le courant de bobine réel avant la commutation pendant le premier mode de fonctionnement était déphasé par rapport à la tension appliquée à la bobine concernée.

3. Procédé selon la revendication 1 ou 2,
dans lequel, dans le premier mode de fonctionnement, il est appliqué à chacune des bobines une tension modulée en largeur d'impulsion dont le facteur d'utilisation est piloté ou régulé pour le réglage de l'amplitude de la tension à la bobine concernée.

4. Procédé selon la revendication 1 ou 2,
dans lequel, dans le premier mode de fonctionnement, une première tension modulée en largeur d'impulsion ayant une première polarité et une deuxième tension modulée en largeur d'impulsion ayant une deuxième polarité opposée à la première polarité sont appliquées à au moins l'une des bobines, dont les facteurs d'utilisation sont réglables en vue du réglage de l'amplitude et de la polarité de la tension appliquée à la bobine.

5. Procédé selon la revendication 1 ou 2,
dans lequel, dans le premier mode de fonctionnement, le courant circulant effectivement dans au moins l'une des bobines est mesuré et l'amplitude de la tension appliquée à la bobine concernée est régulée en conséquence.

6. Procédé selon la revendication 3,
dans lequel, dans le premier mode de fonctionnement, lorsque le moteur est à l'arrêt, le facteur d'utilisation est régulé uniquement à la bobine du moteur à laquelle est mesuré le courant de bobine plus élevé ou le plus élevé.

7. Procédé selon la revendication 6,
dans lequel, dans le premier mode de fonctionnement, lorsque le moteur est à l'arrêt, la tension appliquée à la bobine concernée est régulée en ce sens que le facteur d'utilisation de la tension modulée en largeur d'impulsion appliquée à la bobine est augmenté ou diminué d'un échelon prédéterminé dans chaque phase de hachage.

8. Procédé selon la revendication 1,
dans lequel, dans le premier mode de fonctionnement, pendant la rotation du moteur, l'amplitude de la tension est régulée par un régulateur PI.

9. Procédé selon la revendication 2,
dans lequel, pour la régulation du courant de bobine pendant la rotation du moteur dans le premier mode de fonctionnement, il est fixé pour chaque demi-onde du courant de bobine nominal un seuil de courant (S) qui n'est atteint et dépassé que pendant une partie prédéterminée de la durée de la demi-onde respective, dans lequel, dans la demi-onde, le nombre des phases de hachage dans lesquelles le courant de bobine nominal atteint et dépasse le seuil de courant (S) fixé pour cette demi-onde, est comparé au nombre des phases de hachage dans lesquelles le courant de bobine mesuré atteint et dépasse effectivement ce seuil de courant (S), et dans lequel la différence entre ces nombres est délivrée en tant qu'écart de régulation à un régulateur (PI) en vue de la régulation du courant de bobine dans la demi-onde suivante.

10. Procédé selon la revendication 1,
dans lequel le seuil de courant (S) est fixé à un niveau tel qu'il n'est atteint et dépassé par le courant de la bobine nominal que pendant une durée comprise entre environ 5 % et environ 20 % de la durée d'une demi-onde.

11. Procédé selon la revendication 2,
dans lequel, lors de la commutation du deuxième au premier mode de fonctionnement, l'application du déphasage (d) au courant de bobine nominal est de nouveau annulée.

12. Procédé selon la revendication 2,
dans lequel le déphasage (d) dans le premier mode de fonctionnement est déterminé à partir du retard entre une valeur de crête de la tension appliquée à l'une des bobines et la valeur de crête du courant généré par celle tension et circulant effectivement à travers cette bobine.

13. Procédé selon la revendication 2,
dans lequel, pendant chaque demi-onde du courant de bobine nominal, il est déterminé un seuil de courant (S) qui n'est atteint et dépassé que pendant une partie prédéterminée de la durée de cette demi-onde, et le déphasage (d) dans le premier mode de fonctionnement est déterminé sur la base du retard du point milieu entre le début et la fin de l'atteinte et du dépassement du seuil de courant (S) par le courant de bobine nominal par rapport au point milieu entre le début et la fin de l'atteinte et du dépassement du seuil de courant (S) par le courant de bobine réel.

14. Procédé selon la revendication 1 ou 2,
dans lequel le moteur pas à pas est commandé en mode micropas ou en mode demi-pas ou en mode pas entier, respectivement avec une courbe de courant de bobine nominal sinusoïdale ou non sinusoïdale.

15. Agencement de circuit pour exploiter un moteur pas à pas avec une courbe de courant de bobine nominal prédéterminée, qui se compose d'une pluralité de valeurs de courant de bobine nominal instantanées se succédant dans le temps, qui sont générées chacune dans les bobines du moteur au moyen de phases de hachage, pour la mise en œuvre d'un procédé selon la revendication 1, avec :
un premier hacheur de courant (CH-U) pour le premier mode de fonctionnement activé dans une gamme de vitesses basses prédéterminée du moteur, au moyen duquel, dans chaque phase de hachage, une tension modulée en largeur d'impulsion avec facteur d'utilisation et polarité réglables peut être appliquée à au moins l'une des bobines (A ; B) du moteur pour générer une valeur de courant de bobine instantanée nominale,
un deuxième hacheur de courant (CH-I) pour le deuxième mode de fonctionnement activé dans une gamme de vitesses plus élevées prédéterminée du moteur, au moyen duquel une une valeur de courant de bobine nominale instantanée peut être gravée dans les bobines par activation et mesure dans le temps d'au moins l'une de trois phases de courant de bobine (ON, FD, SD), ainsi que
un comparateur (K) pour comparer un courant circulant réellement à travers au moins l'une des bobines (A ; B) avec un courant de bobine nominal prédéterminé, le signal de sortie du comparateur (K) étant délivré à une unité (I-U) pour la poursuite de courant du premier hacheur de courant (CH-U) par mise à l'échelle d'un courant de bobine nominal délivré pendant le premier mode de fonctionnement, ainsi qu'au deuxième hacheur de courant (CH-I) pour l'activation d'au moins l'une des trois phases de courant de bobine (ON, FD, SD) pendant le deuxième mode de fonctionnement, dans lequel l'unité (I-U) pour la poursuite de courant du premier hacheur de courant (CHU) comprend un premier compteur (Z1) qui, pendant chaque demi-onde du courant de bobine nominal, compte le nombre de phases de hachage dans lesquelles le courant de bobine nominal atteint et dépasse le seuil de courant (S) prédéterminé pour cette demi-onde, ainsi qu'un deuxième compteur (Z2) qui, pendant chaque demi-onde du courant de bobine nominal, compte le nombre de phases de hachage dans lesquels la valeur de courant de bobine mesurée atteint et dépasse ce seuil de courant (S), ainsi qu'un soustracteur (S) au moyen duquel la différence entre les deux nombres est déterminée, et dont la sortie est délivrée à un régulateur (PI) en vue de la régulation du courant de bobine dans la demi-onde suivante.

16. Agencement de circuit pour exploiter un moteur pas à pas avec une courbe de courant de bobine nominal prédéterminée, qui se compose d'une pluralité de valeurs de courant de bobine nominal instantanées se succédant dans le temps, qui sont générées chacune dans les bobines du moteur au moyen de phases de hachage, pour la mise en œuvre d'un procédé selon la revendication 2, avec :
un premier hacheur de courant (CH-U) pour le premier mode de fonctionnement activé dans une gamme de vitesses basses prédéterminée du moteur, au moyen duquel, dans chaque phase de hachage, une tension modulée en largeur d'impulsion avec facteur d'utilisation et polarité réglables peut être appliquée à au moins l'une des bobines (A ; B) du moteur pour générer une valeur de courant de bobine instantanée nominale,
un deuxième hacheur de courant (CH-I) pour le deuxième mode de fonctionnement activé dans une gamme de vitesses plus élevées prédéterminée du moteur, au moyen duquel une une valeur de courant de bobine nominale instantanée peut être gravée dans les bobines par activation et mesure dans le temps d'au moins l'une de trois phases de courant de bobine (ON, FD, SD),
un comparateur (K) pour comparer un courant circulant réellement à travers au moins l'une des bobines (A ; B) avec un courant de bobine nominal prédéterminé, le signal de sortie du comparateur (K) étant délivré à une unité (I-U) pour la poursuite de courant du premier hacheur de courant (CH-U) par mise à l'échelle d'un courant de bobine nominal délivré pendant le premier mode de fonctionnement, ainsi qu'au deuxième hacheur de courant (CH-I) pour l'activation d'au moins l'une des trois phases de courant de bobine (ON, FD, SD) pendant le deuxième mode de fonctionnement, et
un détecteur (D-d) pour détecter un déphasage (d) entre une tension effective appliquée à l'une des bobines (A ; B) et le courant de bobine réel pendant le premier mode de fonctionnement, ainsi qu'un additionneur (A1) au moyen duquel ce déphasage (d) est appliqué au courant (D) de bobine nominal délivré lors de la commutation vers le deuxième mode de fonctionnement et pendant le deuxième mode de fonctionnement.

17. Agencement de circuit selon la revendication 15,
dans lequel le régulateur est un régulateur PI (PI), avec lequel le facteur d'utilisation de la tension modulée en largeur d'impulsion est régulée dans le premier mode de fonctionnement pendant la rotation du moteur.
